(19) Europäisches Patentamt
European Patent Office
Office européen des brevets

(11) EP 3 173 872 B1

(12) **EUROPEAN PATENT SPECIFICATION**

(45) Date of publication and mention of the grant of the patent:
**06.04.2022 Bulletin 2022/14**

(21) Application number: **16196792.2**

(22) Date of filing: **02.11.2016**

(51) International Patent Classification (IPC):
***G03G 15/08*** *(2006.01)*

(52) Cooperative Patent Classification (CPC):
**G03G 15/0818**

(54) **DEVELOPING MEMBER, METHOD OF PRODUCING THE SAME, PROCESS CARTRIDGE AND ELECTROPHOTOGRAPHIC IMAGE FORMING APPARATUS**

ENTWICKLUNGSELEMENT, VERFAHREN ZUR HERSTELLUNG DAVON, PROZESSKARTUSCHE UND VORRICHTUNG ZUR ELEKTROFOTOGRAFISCHEN BILDGEBUNG

ÉLÉMENT DE DÉVELOPPEMENT, SON PROCÉDÉ DE FABRICATION, CARTOUCHE DE TRAITEMENT ET APPAREIL ÉLECTROPHOTOGRAPHIQUE DE FORMATION D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2015 JP 2015224327**

(43) Date of publication of application:
**31.05.2017 Bulletin 2017/22**

(73) Proprietor: **Canon Kabushiki Kaisha**
**Tokyo 146-8501 (JP)**

(72) Inventors:
- **NAGAOKA, Kazuaki**
  **Tokyo, Tokyo 146-8501 (JP)**
- **NAKAMURA, Minoru**
  **Tokyo, Tokyo 146-8501 (JP)**
- **MIYAUCHI, Yuto**
  **Tokyo, Tokyo 146-8501 (JP)**
- **YAMAGUCHI, Sosuke**
  **Tokyo, Tokyo 146-8501 (JP)**

(74) Representative: **TBK**
**Bavariaring 4-6**
**80336 München (DE)**

(56) References cited:
**US-A1- 2012 251 171**
**US-A1- 2012 263 499**
**US-A1- 2013 281 275**
**US-A1- 2014 221 184**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 173 872 B1

## Description

BACKGROUND OF THE INVENTION

Field of the Invention

The present disclosure relates to developing members used in electrophotographic image forming apparatuses, methods of producing the same, process cartridges and electrophotographic image forming apparatuses.

Description of the Related Art

In electrophotographic image forming apparatuses operated by a non-magnetic one-component developing method, the developing member feeds a toner and charges the toner at the same time. The desired properties of the developing member include characteristic values such as appropriate hardness and electric resistance. The developing member is often composed of an elastic body to achieve such hardness. Furthermore, the developing member contains an ionic conductive agent such as quaternary ammonium salts to impart electro-conductivity to the elastic body. Since the ionic conductive agent in the elastic layer is homogeneously present in the molecular level, in comparison to electron conductive agents, the electric resistance of the developing member is barely affected by a fluctuation in the amount of the ionic conductive agent to be added or a difference in the dispersion conditions.

The developing member should be brought into contact with other members such as a photosensitive member and a toner feeding member because of its configurational reasons, and receives stress from these other contacting members at predetermined positions when the developing member is not driven, for example, during transportation of the product. In particular, continuous application of stress to the developing member containing an ionic conductive agent from other members under a high temperature and high humidity environment causes migration of the ionic conductive agent at the contacting position to the other members. As a result, the ionic conductive agent bleeds to the surface of the developing member, causing locally uneven electric resistance due to the bleed. The ionic conductive agent bleeding to the surface of the developing member may adhere or migrate to the surfaces of the other members in contact with the developing members, affecting the quality of electrophotographic images.

To solve these problems, Japanese Patent Application Laid-Open No. 2005-120158 and Japanese Patent Application Laid-Open No. 2007-297438 disclose ionic conductive agents each composed of: a cation having a functional group reactive with a resin; and bis(trifluoromethanesulfonyl)imide and/or tris(trifluoromethanesulfonyl)methide as an anion, wherein the ionic conductive agent is partially fixed inside the resin to prevent bleed of the ionic conductive agent and ensure the electro-conductivity of the developing member simultaneously.

US 2014/221184 A1, US 2013/281275 A1, US 2012/263499 A1 and US 2012/251171 A1 disclose an electrophotographic member comprising an electroconductive substrate and a layer comprising an anion and a binder resin having a cationic organic group.

SUMMARY OF THE INVENTION

The present inventors, who have conducted research, have confirmed that in an ionic conductive agent composed of a cation having a functional group reactive with a resin and an anion having a larger molecular weight, the cation of the ionic conductive agent can be fixed inside the resin; and a large molecular weight anion selectively used can prevent bleed of the ionic conductive agent from the elastic layer and ensure the electro-conductivity of the developing member.

Unfortunately, in such an ionic conductive agent having a cation fixed inside the resin and an anion having a large molecular weight to prevent the bleed, adverse effects which may be caused by reduced mobility of the ionic conductive agent have been found in some cases in the examination under low temperature and low humidity (such as a temperature of 10°C and a relative humidity of 10%) environments where the molecular mobility reduces. Specifically, there was a case where the charge of the surface of the toner on the surface of the developing member or the charge of the surface of the developing member generated through frictional charging by other members was not sufficiently relaxed, and repeated friction charged up the surface of the developing member by about several volts to a dozen volt. Such charge up may appear in images as developing contrast, namely, as a difference in density of images. Such images are more often generated through frequent friction, in other words, in high-speed image forming apparatuses.

The present disclosure is directed to providing a developing member which can stably form high-quality electrophotographic images under a variety of environments, and a method of producing the same.

The present disclosure is also directed to providing an electrophotographic process cartridge and an image forming apparatus which contribute to stably form high-quality electrophotographic images.

The present inventors have conducted extensive research to solve the problems. As a result, the present

inventors have found that use of a resin having a cationic organic group in the polymer chain, a specific anion and a specific metal oxide in combination can ensure compatibility between preventing bleed of the ionic conductive agent under a high temperature and high humidity environment and preventing charge up of the developing member under a low temperature and low humidity environment, and have completed the present disclosure.

Namely, according to one aspect of the present disclosure, there is provided a developing member as defined in claim 1, with an embodiment thereof in claim 2.

According to another aspect of the present disclosure, there is provided a method of producing the developing member, the method including: (1) forming a coat composed of a coating material for forming an elastic layer on an electroconductive substrate, the coating material including a binder resin raw material containing a cation having a reactive functional group, an anion and a compound having a functional group reactive with the reactive functional group, and particles containing aluminium oxide or magnesium oxide being an oxide of a metal having an electronegativity of 11.0 or less as a metal ion; and (2) forming an elastic layer including the binder resin and the particles by reacting the reactive functional group of the cation with the functional group of the compound in the coat, and reacting the binder resin raw material in the coat to prepare a binder resin having the cation introduced into the molecule, the anion being at least one selected from the group consisting of a fluorinated sulfonate anion, a fluorinated carboxylate anion, a fluorinated sulfonylimide anion, a fluorinated sulfonylmethide anion, a dicyanamide anion, a fluorinated alkylfluoroborate anion, a fluorinated phosphate anion, a fluorinated antimonate anion, a fluorinated arsenate anion and a bis(oxalate)borate anion, as claimed in claim 3, with embodiments thereof in claims 4-7.

According to still another aspect of the present disclosure, there is provided a process cartridge detachably mountable on the main body of an electrophotographic image forming apparatus, and including a developing device, the developing device including the developing member, as claimed in claim 8.

According to still another aspect of the present disclosure, there is provided an electrophotographic image forming apparatus including an image bearing member carrying an electrostatic latent image, a charging device charging the image bearing member, an exposing device forming an electrostatic latent image on the charged image bearing member, a developing device developing the electrostatic latent image with a toner to form a toner image, a transferring device transferring the toner image onto a transfer material, and a fixing device fixing the toner image transferred onto the transfer material, the developing device including the developing member, as claimed in claim 9.

Further features of the present disclosure will become apparent from the following description of exemplary embodiments with reference to the attached drawings.

The terms "a particle" should be interpreted as "particles" in the following description.

BRIEF DESCRIPTION OF THE DRAWINGS

FIG. 1A is a schematic view illustrating one example of the developing member of the present disclosure.
FIG. 1B is a schematic view illustrating another example of the developing member of the present disclosure.
FIG. 2 is a diagram illustrating the electronegativity of Pauling used in calculation of the electronegativities of metal ions in the present disclosure.
FIG. 3 is a schematic view of an electrophotographic image forming apparatus used in the present disclosure.
FIG. 4 is a schematic view of a developing unit used in the present disclosure.
FIG. 5 is a schematic view of an electrophotographic process cartridge used in the present disclosure.
FIG. 6 is a schematic view of a coating apparatus used in the present disclosure.
FIG. 7 is a schematic view of an apparatus for measuring the amount of deformation of the developing member used in the present disclosure.
FIG. 8 is a schematic view of an apparatus for evaluating charge up of the developing member used in the present disclosure.

DESCRIPTION OF THE EMBODIMENTS

Preferred embodiments of the present disclosure will now be described in detail in accordance with the accompanying drawings.

The developing member according to the present invention includes an electro-conductive substrate and an elastic layer disposed on the electro-conductive substrate. One embodiment of the developing member is illustrated in FIG. 1A and FIG. 1B. As illustrated in FIG. 1A, the developing member includes an electro-conductive substrate 11 and an elastic layer 12 disposed on the outer periphery of the substrate 11. As illustrated in FIG. 1B, on the surface of the elastic layer 12, an additional elastic layer as a surface layer 13 may be formed. Furthermore, the surface layer may have a multi-layer configuration such as a two-layer configuration. In this case, the elastic layer of the present invention

can be used in any one of layers of the multi-layer configuration. From the point of view of relaxing the charge of the surface of the developing member, the elastic layer of the present invention can be used as the outermost surface.

<Electro-conductive substrate>

The electro-conductive substrate functions as an electrode and a supporting member of the developing member. The electro-conductive substrate is composed of a metal or an alloy such as aluminum, a copper alloy or stainless steel; chromium or nickel-plated iron; or an electro-conductive material such as a synthetic resin having electro-conductivity. The shape of the electro-conductive substrate may be solid or hollow.

<Elastic layer>

The elastic layer according to the present invention includes a binder resin, an anion and a particle containing a metal oxide.

[Binder resin]

The binder resin contains a resin A having a cationic organic group in the polymer chain.
Examples of the cationic organic group include the following organic groups: non-cyclic groups such as a quaternary ammonium roup, a sulfonium group and a phosphonium group; and nitrogen-containing heterocyclic groups such as an imidazolium group, a pyridinium group, a pyrolidinium group, a piperidinium group, a pyrazolium group, a morpholinium group, a pyrazolinium group, a hydroimidazolium group, a triazolium group, a pyridazinium group, a pyrimidinium group, a pyrazinium group, a thiazolium group, an oxazolium group, an indolium group, a quinolinium group, an isoquinolinium group and a quinoxalinium group.
The cationic organic group has at least one structure selected from the group consisting of structures represented by the following Formulae (1) to (6).
Examples of the resin A include resins having polymer chains composed of polyether, polyester or the like and at least one structure having a cationic organic group, the at least one structure being bonded to the polymer chain.

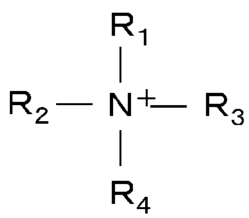

Formula (1)

where $R_1$ to $R_4$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; at least two of $R_1$ to $R_4$ is a structure including a moiety bonded to the polymer chain through one bond selected from the group consisting of an ether bond, an ester bond and a urethane bond.

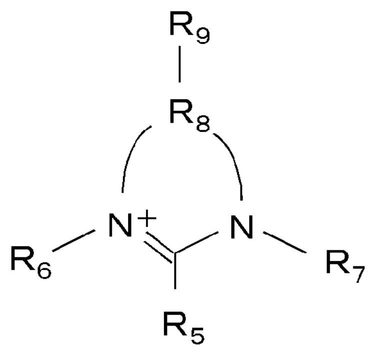

Formula (2)

where $R_5$ to $R_7$, and $R_9$ each independently represent a hydrogen atom, a hydrocarbon group having 1 to 30 carbon atoms, or a structure including a moiety bonded to a polymer chain through one bond selected from the group consisting

of an ether bond, an ester bond and a urethane bond; $R_9$ is a hydrocarbon group having 1 to 3 carbon atoms and may contain
a heteroatom: at least one of $R_5$ to $R_7$ and $R_9$ is a structure including a moiety bonded to the polymer chain through one bond selected from the group consisting of an ether bond, an ester bond and a urethane bond.

In Formula (2), $R_8$ can be a group of atoms needed to form a nitrogen-containing 5-membered heterocyclic ring or a nitrogen-containing 6-membered heterocyclic ring with the two nitrogen atoms in Formula (2). Specific structures of Formula (2) in this case are shown in Formula (2-1) and Formula (2-2). In Formula (2-1) and Formula (2-2), $R_5$ to $R_7$ and $R_9$ are the same as those in Formula (2).

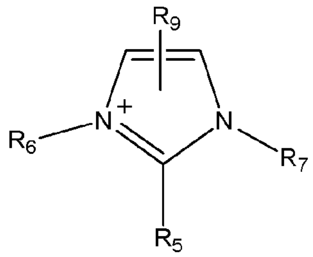

Formula (2-1)

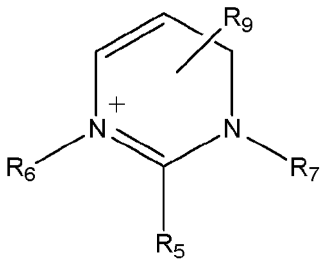

Formula (2-2)

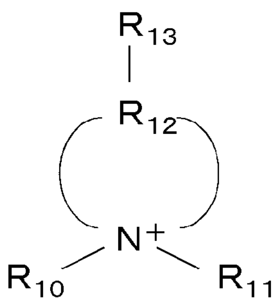

Formula (3)

where $R_{10}$, $R_{11}$ and $R_{13}$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; $R_{12}$ is a hydrocarbon group having 3 to 5 carbon atoms and may include an oxygen atom or a sulfur atom; at least one of $R_{10}$, $R_{11}$ and $R_{13}$ is a structure including a moiety bonded to the polymer chain through one bond selected from the group consisting of an ether bond, an ester bond and a urethane bond.

In Formula (3), $R_{12}$ can be a group of atoms needed to form 5- to 7-membered heterocyclic rings containing one nitrogen atom in Formula (3) or containing one nitrogen atom in Formula (3) and one oxygen atom. Specific structures of Formula (3) in this case are shown in Formula (3-1) and Formula (3-2). In Formula (3-1) and Formula (3-2), $R_{10}$, $R_{11}$ and $R_{13}$ are the same as those in Formula (3).

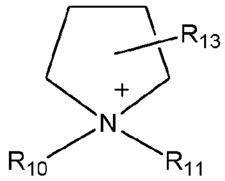

Formula (3-1)

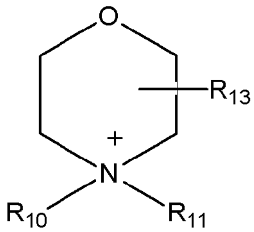

Formula (3-2)

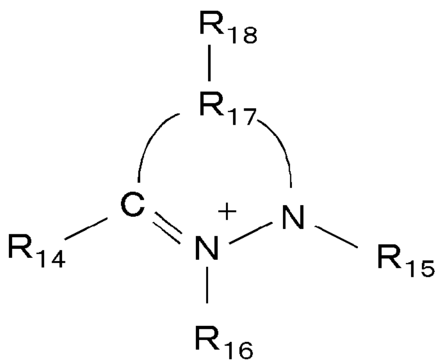

Formula (4)

where $R_{14}$ to $R_{16}$ and $R_{18}$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; $R_{17}$ is a hydrocarbon group having 1 to 3 carbon atoms and may contain a heteroatom; at least one of $R_{14}$ to $R_{16}$ and $R_{18}$ is a structure including a moiety bonded to the polymer chain through one bond selected from the group consisting of an ether bond, an ester bond and a urethane bond.

In Formula (4), $R_{17}$ can be a group of atoms needed to form 5- to 7-membered heterocyclic rings containing the two nitrogen atoms in Formula (4). Specific structure of Formula (4) in this case is shown in Formula (4-1) . In Formula (4-1), $R_{14}$ to $R_{16}$ and $R_{18}$ are the same as those in Formula (4).

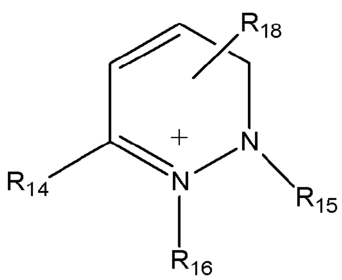

Formula (4-1)

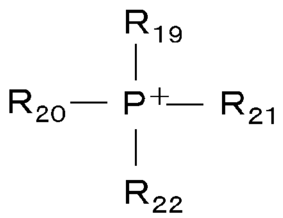

Formula (5)

where $R_{19}$ to $R_{22}$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; at least one of $R_{19}$ to $R_{22}$ is a structure including a moiety bonded to the polymer chain through one bond selected from the group consisting of an ether bond, an ester bond and a urethane bond.

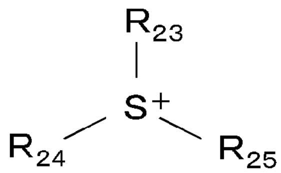

Formula (6)

where $R_{23}$ to $R_{25}$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; at least one of $R_{23}$ to $R_{25}$ is a structure including a moiety bonded to the polymer chain through one bond selected from the group consisting of an ether bond, an ester bond and a urethane bond.

Among these resins A, resins having a cationic organic group having a nitrogen atom in its cationic skeleton, such as a quaternary ammonium group and a nitrogen-containing heterocyclic cation group, used in the elastic layer are preferred because these resins provide elastic layers having relatively higher electro-conductivity than in elastic layers containing resins having no nitrogen atom in their cationic skeletons. In these resins, a small amount of a quaternary ammonium group or an imidazolium group can provide an elastic layer having excellent electro-conductivity and demonstrate electro-conductivity in the elastic layer, and thus barely affects other properties of the elastic layer. Accordingly, a quaternary ammonium group or an imidazolium group is suitably used.

The resin A can be a resin having three or more moieties each having a cationic organic group bonded to the polymer chain through one bond selected from the group consisting of an ether bond, an ester bond and a urethane bond from the viewpoint of the resilience of the elastic layer. The resilience of the elastic layer will be described later.

The binder resin can contain the resin A and a resin B having no cationic organic group in the polymer chain. Examples of the resin B include the following resins: an epoxy resin, a urethane resin, a urea resin, an ester resin, an amide resin, an imide resin, an amideimide resin, a phenol resin, a vinyl resin, a silicone resin and a fluorine resin.

The mass ratio of the resin A to the resin B in the binder resin can be appropriately adjusted according to the desired performance. The resin B should be contained in a ratio not inhibiting the electro-conductivity originally targeted.

[Anion]

Examples of the anion contained in the elastic layer include: a fluorinated sulfonate anion, a fluorinated carboxylate anion, a fluorinated sulfonylimide anion, a fluorinated sulfonylmethide anion, a dicyanamide anion, a fluorinated alkylfluoroborate anion, a fluorinated phosphate anion, a fluorinated antimonate anion, a fluorinated arsenate anion and a bis(oxalate)borate anion. The elastic layer can contain one or more of these anions. These anions, which have relatively large molecular weights, have low migration in the elastic layer, and are very useful against bleed under a high temperature and high humidity environment.

Examples of the fluorinated sulfonate anion include: a trifluoromethane sulfonate anion, a fluoromethanesulfonate anion, a perfluoroethylsulfonate anion, a perfluoropropylsulfonate anion, a perfluorobutylsulfonate anion, a perfluoropentylsulfonate anion, a perfluorohexylsulfonate anion and a perfluorooctylsulfonate anion.

Examples of the fluorinated carboxylate anion include: a trifluoroacetate anion, a perfluoropropionate anion, a perfluorobutyrate anion, perfluorovalerate anion and a perfluorocaproate anion.

Examples of the fluorinated sulfonylimide anion include: anions such as a trifluoromethanesulfonylimide anion,

a perfluoroethylsulfonylimide anion, a perfluoropropylsulfonylimide anion, a perfluorobutylsulfonylimide anion, a perfluoropentyl sulfonylimide anion, a perfluorohexylsulfonylimide anion, a perfluorooctylsulfonylimide anion and a fluorosulfonylimide anion; and a cyclic anion such as a cyclo-hexafluoropropane-1,3-bis(sulfonyl)imide anion.

Examples of the fluorinated sulfonylmethide anion include: a trifluoromethanesulfonylmethide anion, a perfluoroethylsulfonylmethide anion, a perfluoropropylsulfonylmethide anion, a perfluorobutylsulfonylmethide anion, a perfluoropentylsulfonylmethide anion, a perfluorohexylsulfonylmethide anion and a perfluorooctylsulfonylmethide anion.

Examples of the fluorinated alkylfluoroborate anion include a trifluoromethyltrifluoroborate anion and a perfluoroethyltrifluoroborate anion.

Examples of the fluorinated phosphate anion include a hexafluorophosphate anion, a tris-trifluoromethyltrifluorophosphate anion and a tris-perfluoroethyltrifluorophosphate anion.

Examples of the fluorinated antimonate anion include a hexafluoroantimonate anion and a trifluoromethylpentafluoroantimonate anion.

Examples of the fluorinated arsenate anion include a hexafluoroarsenate anion and a trifluoromethylpentafluoroarsenate anion.

Examples of other anions include a dicyanamide anion and a bis (oxalate)borate anion.

Among these anions, those having an electron-attractive fluorinated sulfonyl group such as a fluorinated sulfonate anion, a fluorinated sulfonylimide anion and a fluorinated sulfonylmethide anion can be contained in the elastic layer because addition of a relatively small amount of these anions in the elastic layer can provide a developing member having desired electro-conductivity.

[Particle containing metal oxide]

A particle containing a metal oxide is present in the elastic layer, and the metal oxide being aluminum oxide or magnesium oxide is an oxide of a metal having an electronegativity of 11.0 or less as a metal ion. The present inventors have found that such a particle containing said metal oxide used in the elastic layer ensure the electro-conductivity of the developing member in a low voltage range under a low temperature and low humidity environment. The present inventors believe that the following mechanism can explain this phenomenon.

First, the electronegativity of the metal ion will be described. Each element generally has a known Pauling's electronegativity $\chi_0$, which is highly correlated with readiness in donating or receiving of charges. The electronegativity $\chi_i$ of each metal oxide as a metal ion is determined by the following Expression (1):

$$\chi_i = (1 + 2z) \times \chi_0$$

Expression (1)

(where z represents the number of charges)

The table of Pauling's electronegativity used in the examination is shown in FIG. 2. For example, $Al_2O_3$ as a metal ion has an electronegativity of 10.5 calculated from Expression (1) where aluminum has a Pauling's electronegativity of 1.5 and the number of charges of 3.

The followings are known: In a metal oxide having a large electronegativity as a metal ion, the metal ions on the surface of the metal oxide strongly attract pairs of electrons of oxygen ions due to the relationship with the moisture present in the elastic layer or near the surface of the developing member. As a result, O-H bonds weaken, and $H^+$ is dissociated and functions as an acid point. Conversely, it is known that in a metal oxide having a small electronegativity as a metal ion, $OH^-$ groups are dissociated and function as base points. In this case, dissociated $OH^-$groups are present in the elastic layer. It is known that these $OH^-$ groups have very large mobility among a variety of ions.

As mentioned above, the elastic layer of the present invention contains an anion having a large molecular weight to prevent bleed under a high temperature and high humidity environment. It is believed that such an anion is relatively difficult to migrate in the elastic layer in a low voltage range, that is, at a small electric field, and under a low temperature and low humidity environment.

In the developing member of the present invention, dissociated $OH^-$groups are present on the surface of the metal oxide in the elastic layer. Therefore, it is believed that these dissociated $OH^-$ groups compensate for reduced mobility of the anion in a low voltage range to move charges, ensuring the electro-conductivity of the developing member. It is also believed that because these $OH^-$ groups are generated by the moisture on the surface of the metal oxide, $OH^-$ groups can be fed as long as the moisture is present. Accordingly, the $OH^-$groups also have an effect of preventing degradation due to electrical conduction.

The present inventors, who have conducted research on a variety of metal oxides, have found that a metal oxide having an electronegativity of 11.0 or less as a metal ion provides the effect inferred above. From Expression (1),

examples of the metal oxide having an electronegativity of 11.0 or less include magnesium oxide, zinc oxide, lead oxide, aluminum oxide, neodymium oxide, dysprosium oxide, yttrium oxide, cadmium oxide, cobalt oxide and copper oxide. Magnesium oxide and aluminum oxide are used because of availability. If impurities are present in the particle containing a metal oxide, the impurities may inhibit the advantageous effects of the present invention or may cause unexpected adverse effects. Accordingly, a particle containing at least 90% by mass or more metal oxide is preferred, and a particle containing only a metal oxide is more preferred.

The particle contains preferably 1 to 75 parts by mass, more preferably 5 to 75 parts by mass of the metal oxide relative to 100 parts by mass of the resin solid content in the elastic layer. A content of the metal oxide within the above range can provide a developing member sufficiently exhibiting electro-conductivity under a low temperature and low humidity environment. A content of the metal oxide within the above range also can prevent producing a hard and fragile elastic layer caused by the hardness of the elastic layer reflecting the hardness of the metal oxide. As a result, a reduction in durability of the developing member can be prevented.

Since $OH^-$ groups are dissociated by the moisture on the surface of the metal oxide as described above, a metal oxide having a small particle diameter and a large specific surface area can be used. In this case, an electroconductive effect can be attained through addition of a small amount of metal oxide. A preferred particle diameter range is 1.0 $\mu$m or less in terms of a volume average particle diameter.

[Other components]

The elastic layer may contain a compounding agent, a non-electroconductive filler, a crosslinking agent and a catalyst when necessary in ranges not impairing the advantageous effects of the present invention.

Examples of the compounding agent include fillers, softening agents, processing aids, tackifiers, antitack agents and foaming agents usually used in resins. Examples of the non-conductive filler include silica, quartz powder and calcium carbonate. Examples of the crosslinking agent include, but are not particularly limited to, tetraethoxysilane, di-t-butyl peroxide, 2,5-dimethyl-2,5-di(t-butylperoxy)hexane and dicumyl peroxide.

In the case where a developing member includes an elastic layer as a surface layer thereof and the elastic layer needs surface roughness, a particle for controlling roughness may be separately added in the elastic layer. The particle for controlling roughness can be appropriately selected according to the necessary roughness. A particle having a volume average particle diameter of 3 to 20 $\mu$m is suitably used. The particle can be added in an amount of 1 to 75 parts by mass relative to 100 parts by mass of the resin solid content in the elastic layer not to impair the advantageous effects of the present invention. Examples of usable fine particles for controlling roughness include fine particles of a polyurethane resin, a polyester resin, a polyether resin, a polyamide resin, an acrylic resin and a phenol resin.

[Production of binder resin]

Examples of the resin A having a cationic organic group in the polymer chain include resins produced from an ionic conductive agent a1 containing an anion and a cation having at least one reactive functional group, and "a compound a2 reactive with the ionic conductive agent" as raw materials.

[Ionic conductive agent]

The cation of the ionic conductive agent contains a cationic skeleton and a substituent having at least one reactive functional group. The cation may further contain a substituent having no reactive functional group. The substituent having a reactive functional group and the substituent having no reactive functional group are each bonded to the cationic skeleton directly or through a linking group.

Examples of the cationic skeleton include the following cations: non-cyclic cations such as a quaternary ammonium cation, a sulfonium cation and a phosphonium cation; and nitrogen-containing heterocyclic rings such as an imidazolium cation, a pyridinium cation, a pyrolidinium cation, a piperidinium cation, a pyrazolium cation, a morpholinium cation, a pyrazolinium cation, a hydroimidazolium cation, a triazolium cation, a pyridazinium cation, a pyrimidinium cation, a pyrazinium cation, a thiazolium cation, an oxazolium cation, an indolium cation, a quinolinium cation, an isoquinolinium cation and a quinoxalinium cation.

Examples of the reactive functional group included in the cation of the ionic conductive agent include a carboxyl group, a hydroxy group and an amino group. Those having a hydroxy group are suitably used because of excellent dispersion stability of the coating material containing the ionic conductive agent. Two or more reactive functional groups are preferred, and three or more reactive functional groups are more preferred. This is for the following reason.

A cation having one reactive functional group is very useful against bleed because the cation of the ionic conductive agent is fixed inside the resin. However, the fixed cation does not act as a crosslinking point, and therefore a large amount of the ionic conductive agent added may lead to difficulties in maintaining the hardness of the resin. A

cation having two reactive functional groups can serve as a crosslinking point and facilitates prevention of bleed of the ionic conductive agent and maintenance of the hardness of the resin. As a result, the amount of the ionic conductive agent to be added has an increased amount of freedom. Furthermore, a cation having three or more reactive functional groups serves as a three-dimensional crosslinking point. As a result, the resilience of the elastic layer is more significantly enhanced than those having two or less reactive functional groups.

Throughout the specification, "resilience" refers to a property of an elastic layer deforming under stress in a high temperature and high humidity environment for a long time, and resiling after a predetermined time has passes after removal of the stress from the elastic layer. A higher resilience of the elastic layer more significantly reduces the amount of residual deformation of a developing member including the elastic layer left under a high temperature and high humidity environment for a long time. Accordingly, image defects due to bleed of the ionic conductive agent and image defects due to deformation of the developing member can be prevented simultaneously.

The present inventors infer the following mechanism to significantly enhance the resilience of the elastic layer including an ionic conductive agent containing a cation having three or more reactive functional groups. First, if a resin contained in the elastic layer has a polar functional group such as a carboxy group, a urethane group, an ester group, a hydroxy group or an amino group, it seems that polar functional groups form pseudo crosslinking points through interaction such as hydrogen bonds to contribute to an enhancement in resilience. However, if a resin A having a cationic organic group in the polymer chain is used as a binder resin, an interaction between the cationic organic group and the polar functional group is generated to form pseudo crosslinking points. As a result, the interaction between polar functional groups may be reduced, reducing the resilience.

In a resin synthesized from an ionic conductive agent containing a cation having two reactive functional groups and a compound reactive with the ionic conductive agent, the cationic structure included in the resin is bonded to the polymer chain at two sites. Although the amount of freedom of the movement of the cationic structure bonded to the polymer chain is restricted in some extent, the cationic structure keeps some mobility because of only two bonding sites to the polymer chain. In this state, if the cationic structure approaches the polar functional group (a carboxy group, a urethane group, an ester group, a hydroxy group or an amino group) in the resin, a negatively polarized moiety of the polar functional group and the cationic structure having a positive charge attract each other. As a result, the interaction between polar functional groups is reduced, and the number of pseudo crosslinking points is reduced. For this reason, it is believed that the resilience is barely maintained.

In contrast, in a resin synthesized from an ionic conductive agent containing a cation having three or more reactive functional groups and a compound reactive with the ionic conductive agent, the cationic structure included in the resin is bonded to the polymer chain at three or more sites. For this reason, the amount of freedom of the movement of the cationic structure is more restricted than that of the resin synthesized from an ionic conductive agent containing a cation having two reactive functional groups and a compound reactive with the ionic conductive agent. As a result, the cationic structure barely approaches the polar functional group in the resin. The cationic structure also barely approaches the polar functional group because such a bulky cationic structure has steric hindrance to obstruct its movement. The steric hindrance prevents the cationic structure and the polar functional group from attracting each other, unlike the resin synthesized from an ionic conductive agent containing a cation having two reactive functional groups and a compound reactive with the ionic conductive agent. Accordingly, it is believed that the interaction between polar functional groups (pseudo crosslinking points) is barely reduced to be able to suppress a reduction in resilience.

It is believed that the interaction between polar functional groups is also inhibited by the type of the anion. It is believed that the anion having high affinity with proton to facilitate reduction of protons, such as a halide anion, a sulfate anion and a nitrate anion, will readily interact with the protons included in the polar functional group. In other words, it is believed that because the protons included in the polar functional group (protons located at an $\alpha$-position relative to the carbonyl group of an ester group, and protons included in a urethane group, an amino group and a hydroxy group) are polarized to have positive charges, these protons interact with the negatively polarized sites of the polar functional group. For this reason, it is believed that the interaction between polar functional groups (pseudo crosslinking points) will be lost because of the interaction between the proton and an anion having high affinity with the proton, and as a result, a reduction in resilience cannot be prevented.

In contrast, the anion according to the present invention has characteristics of being significantly chemically stable and having low affinity with protons to barely reduce protons. For this reason, it is believed that the interaction between polar functional groups (pseudo crosslinking points) is hardly lost because of little interaction between the anion and the protons of the polar functional group; thus, the resilience can be maintained.

As described above, both the cation and the anion present in the elastic layer according to the present invention do not reduce the interaction between the polar functional groups (pseudo crosslinking points) of the resin contained in the elastic layer. For this reason, if an ionic conductive agent having three or more reactive functional groups is used as a raw material for the resin A according to the present invention having a cationic organic group in the polymer chain, the ionic conductive agent will be able to significantly prevent a reduction in resilience of the elastic layer.

As shown in Examples and Comparative Examples described later, this effect of reducing the amount of deformation of the developing member (maintaining the resilience of the elastic layer) cannot be obtained in the case where only one of the cation and the anion is the same material as that of the present invention.

In the cation of the ionic conductive agent, the reactive functional group is bonded to the cationic skeleton directly or through a linking group such as a hydrocarbon group, a substituent having an alkylene ether group or a substituent having a branched structure.

Examples of the hydrocarbon group serving as the linking group include hydrocarbon groups having 1 to 30 carbon atoms such as a methylene group, an ethylene group, a propylene group, a butylene group, a pentylene group, a hexylene group and a phenylene group. These hydrocarbon groups may have heteroatoms and may have other functional groups having no reactive functional group (such as hydrocarbon groups having 1 to 30 carbon atoms; halogen groups such as fluorine, chlorine, bromine, and iodine; alkoxy groups such as a methoxy group and an ethoxy group; substituents containing heteroatoms such as an amide group and a cyano group; and haloalkyl groups such as a trifluoromethyl group).

Examples of the substituent having an alkylene ether group and serving as the linking group include alkylene ethers having a degree of polymerization of 1 to 10, such as oligo(ethylene glycol), oligo(propylene glycol) and oligo(tetramethylene glycol).

Examples of the substituent having a branched structure and serving as the linking group include substituents composed of one cationic skeleton having a carbon atom or a nitrogen atom as a branched point, and a plurality of hydroxy groups bonded to the cationic skeleton through a plurality of the linking groups described above, such as a 1,2-propanediol group, a [bis(2-hydroxyethyl)amino]ethylene group and a 2,2-bis(hydroxymethyl)-3-hydroxypropyl group.

Besides a substituent having a hydroxy group as the reactive functional group, the cation of the ionic conductive agent may have one or more substituents having no hydroxy group (such as hydrocarbon groups having 1 to 30 carbon atoms; halogen groups such as fluorine, chlorine, bromine and iodine; alkoxyl groups such as a methoxy group and an ethoxy group; substituents having heteroatoms such as an amide group and a cyano group; and haloalkyl groups such as a trifluoromethyl group).

The anion of the ionic conductive agent can be used as the anion present in the elastic layer. Examples of the anion include anions described above.

The amount of the ionic conductive agent compounded to the elastic layer can be 0.01 parts by mass or more and 20 parts by mass or less relative to 100 parts by mass of the elastic layer. An amount of 0.01 parts by mass or more provides a highly electro-conductive elastic layer while an amount of 20 parts by mass or less provides an elastic layer having particularly excellent resilience.

[Compound a2 reactive with ionic conductive agent]

The compound a2 reactive with the ionic conductive agent as a raw material for the resin A having a cationic organic group in the polymer chain refers to a compound that has two or more functional groups reactive with the reactive functional group included in the cation in one molecule. The compound a2 may react not only with the reactive functional group included in the ionic conductive agent a1 but also with polyol of a compound a3 described later, or a reactive functional group included in a compound contained in another elastic layer. Examples of the compound a2 include isocyanate compounds, carboxylic acid compounds, epoxide compounds and melamine compounds.

Examples of the isocyanate compounds include: aliphatic polyisocyanates such as ethylene diisocyanate and 1,6-hexamethylene diisocyanate (HDI); alicyclic polyisocyanates such as isophorone diisocyanate (IPDI), cyclohexane 1,3-diisocyanate and cyclohexane 1,4-diisocyanate; aromatic isocyanates such as 2,4-tolylene diisocyanate, 2,6-tolylene diisocyanate (TDI), 4,4'-diphenylmethane diisocyanate (MDI), polymeric diphenylmethane diisocyanate, xylylene diisocyanate and naphthalene diisocyanate; and copolymerized products, isocyanurate products, TMP adducts, biuret products thereof, and isocyanate compounds of block products thereof.

Examples of the carboxylic acid compounds include: aliphatic dicarboxylic acids such as adipic acid, sebacic acid, malonic acid, 1,4-cyclohexanedicarboxylic acid and hexahydroisophthalic acid; and aromatic dicarboxylic acids such as orthophthalic acid, isophthalic acid and terephthalic acid.

Examples of the epoxide compounds include aliphatic diepoxides such as 1,4-butanediol diglycidyl ether; and aromatic diepoxides such as bisphenol A diglycidyl ether. Examples of the melamine compound include methylated melamine, butylated melamine, iminomelamine, methyl/butyl mixed melamine and methylolmelamine.

Among these compounds, aromatic isocyanates such as tolylene diisocyanate, diphenylmethane diisocyanate and polymericdiphenylmethane diisocyanate are more suitably used because the resulting resin has excellent resilience.

[Compound a3 having reactive functional group]

In synthesis of the resin with the ionic conductive agent a1 and the compound a2 reactive with an ionic conductive agent to be contained in the elastic layer, besides the ionic conductive agent, an additional "compound a3 having an

reactive functional group" may be separately added to synthesize the resin A in order to further enhance the flexibility of the elastic layer and the other performance required for the developing member. At this time, the reactive functional group included in the compound a3 can be the same reactive functional group included in the ionic conductive agent a1 because the two functional groups barely have difference in reactivity. As a result, the compound a3 and the ionic conductive agent a1 are barely lopsided during synthesis of the resin A and are homogeneously present.

As described above, because a hydroxy group can be used as the reactive functional group used in the ionic conductive agent, polyol is suitably used as the compound a3. The polyol has a plurality of hydroxy groups in the molecule. The hydroxy groups react with the compound a2 reactive with the reactive functional group. Examples of the polyol include, but are not particularly limited to, polyether polyol and polyester polyol.

Examples of the polyether polyol include polyethylene glycol, polypropylene glycol and polytetramethylene glycol.

Examples of the polyester polyol include polyester polyols prepared through condensation reaction of a diol component such as 1,4-butanediol, 3-methyl-1,4-pentanediol and neopentyl glycol or a triol component such as trimethylolpropane with a dicarboxylic acid such as adipic acid, phthalic anhydride, terephthalic acid and hexahydroxyphthalic acid.

The polyether polyol and the polyester polyol may be prepared in the form of a prepolymer having a chain preliminarily extended with an isocyanate such as 2,4-tolylene diisocyanate (TDI), 1,4-diphenylmethane diisocyanate (MDI) or isophorone diisocyanate (IPDI) when necessary.

[Method of producing developing member]

The method of producing the developing member according to the present invention includes (1) forming a coat of a coating material for forming an elastic layer on an electro-conductive substrate, the coating material including a binder resin raw material containing a cation having a reactive functional group, an anion, and a compound having a functional group reactive with the reactive functional group, and a particle containing a metal oxide; and (2) forming an elastic layer including the binder resin and the particle by reacting the reactive functional group of the cation with the functional group of the compound in the coat, and reacting the binder resin raw material in the coat to prepare a binder resin having the cation introduced into the molecule, the anion being at least one selected from the group consisting of a fluorinated sulfonate anion, a fluorinated carboxylate anion, a fluorinated sulfonylimide anion, a fluorinated sulfonylmethide anion, a dicyanamide anion, a fluorinated alkylfluoroborate anion, a fluorinated phosphate anion, a fluorinated antimonate anion, a fluorinated arsenate anion and a bis(oxalate)borate anion.

Examples of the cation having a reactive functional group include the cations for the ionic conductive agent described above. The cation can be at least one selected from the group consisting of a quaternary ammonium cation having at least three reactive functional groups and a nitrogen-containing heterocyclic cation having at least three reactive functional groups. The cation can be an imidazolium cation having at least three reactive functional groups. Examples of the reactive functional group included in the cation include a carboxyl group, a hydroxy group and an amino group. A hydroxy group can be used because of its excellent dispersion stability of coating material containing the ionic conductive agent.

Examples of the compound having a functional group reactive with the reactive functional group include the compound a2 described above. The functional group can be at least one selected from the group consisting of compounds having an isocyanate group, a carboxyl group or an epoxy group, and melamine.

[Method of forming elastic layer]

The elastic layer 12 or the surface layer 13 illustrated in FIG. 1A and FIG. 1B can be formed by any method of forming an elastic layer, and the method can be appropriately selected according to the thickness of the elastic layer. In formation of a thin elastic layer, such as the surface layer 13 illustrated in FIG. 1B, on an electro-conductive substrate, examples of the method include spraying, immersion and roll coating of a coating material. The immersion coating method described in Japanese Patent Application Laid-Open No. S57-5047 of overflowing a coating material from the upper end of an immersion tank has simplicity and excellent production stability as a method of forming an elastic layer. The coat formed on the electroconductive substrate is cured by heating or the like to form an elastic layer.

In formation of an elastic layer having a large thickness, such as the elastic layer 12 illustrated in FIG. 1A and FIG. 1B, examples of the method include a method of co-extruding an electro-conductive substrate and a meltable material for an elastic layer from a crosshead extruder to mold an elastic layer. In use of a liquid material for an elastic layer, examples of the method include a method of injecting a material for an elastic layer into a metal mold provided with a cylindrical pipe, and bridges disposed at both ends of the pipe to hold an electro-conductive substrate, and the electro-conductive substrate held on the bridges, and curing the material with heating.

<Process cartridge, electrophotographic image forming apparatus>

The process cartridge according to the present invention is detachably mountable to the main body of an electrophotographic image forming apparatus. The process cartridge includes a developing device, and the developing device includes the developing member.

The electrophotographic image forming apparatus according to the present invention includes an image bearing member (photosensitive member) bearing an electrostatic latent image, a charging device charging the image bearing member, an exposing device forming an electrostatic latent image on the charged image bearing member, a developing device developing the electrostatic latent image with a toner to form a toner image, a transferring device transferring the toner image onto a transfer material, and a fixing device fixing the toner image transferred onto the transfer material. The developing device includes the developing member.

An exemplary schematic configuration of an electrophotographic image forming apparatus including an electrophotographic process cartridge including one example of the developing member according to the present invention is illustrated in FIG. 3. The electrophotographic image forming apparatus illustrated in FIG. 3 is a tandem color image forming apparatus forming images of black, cyan, magenta and yellow, including electrophotographic process cartridges containing toners of the respective colors. FIG. 4 illustrates a developing unit including one example of the developing member according to the present invention (developing roller). FIG. 5 is a diagram illustrating a schematic cross-section of an electrophotographic process cartridge including one example of the developing member according to the present invention (developing roller).

The developing unit includes a developing member 301, a toner feeding member 302, a toner 303 and a toner amount regulating member 304 and a toner container 305. The electrophotographic process cartridge includes the developing unit, a photosensitive member 306, a cleaning blade 307, a toner waste container 308 and a charging member 309. Some electrophotographic image forming apparatuses used may include the members other than a developing unit which are integrally formed in the electrophotographic image forming apparatuses, and a developing unit detachably mountable onto the electrophotographic image forming apparatuses.

The toner feeding member 302 can have a sponge structure or a fur brush structure composed of a mandrel planted with, for example, rayon or polyamide fibers in view of feeding of the toner to the developing member 301 and scraping of a non-developed toner. For example, an elastic roller composed of a mandrel and a polyurethane foam disposed thereon can be used.

A process of forming an image until image output will be schematically described. The photosensitive member 306 rotates in the arrow direction and is uniformly charged by a charging member 309 for charging the photosensitive member 306. Next, an electrostatic latent image is formed with exposure light 310 from an exposure unit (such as laser or LED; not illustrated) writing an electrostatic latent image on the photosensitive member 306. The electrostatic latent image is visualized (developed) as a toner image by giving a toner from the developing unit disposed in contact with the photosensitive member 306. Recording paper (transfer material) 312 is carried on a conveying belt and is conveyed synchronizing with formation of the toner image.

The visualized toner image on the photosensitive member 306 is once transferred onto an intermediate transfer member sent synchronizing with the rotation of the photosensitive member 306, and then is transferred onto the recording paper 312 by a transfer member 311. After the toner image is transferred onto the recording paper 312, the recording paper 312 is peeled from the conveying belt and sent to a fixing member (not illustrated). The toner is fixed onto the recording paper by a fixing member. The recording paper 312 is discharged from the apparatus to the outside to terminate a series of the image forming process.

The residual toner on the surface of the photosensitive member 306 not transferred onto the recording paper is scraped with the cleaning blade 307 and put into the toner-waste container 308. The cleaned photosensitive member 306 is prepared for the next image formation.

Examples

Specific Examples and Comparative Examples of the elastic layer according to the present invention being applied as the surface layer 13 of the elastic roller as illustrated in FIG. 1B will be described, but the present invention will not be limited to these Examples. First, the ionic conductive agent and Production Examples of the ionic conductive agent, the properties of the metal oxide, and Production Examples of the compound a2 used in Examples and Comparative Examples will be described.

<1. Ionic conductive agent>

[Ionic conductive agents 1-1, 1-2 and 2-1]

The following commercial products shown in Table 1 were prepared as Ionic conductive agents 1-1, 1-2 and 2-1.

[Table 1]

| Ionic conductive agent | Name |
|---|---|
| Ionic conductive agent 1-1 | T etraethylam mon i u m bis(trifluoromethanesulfonyl)imide (made by KISHIDA CHEMICAL Co., Ltd.) |
| Ionic conductive agent 1-2 | Choline bis(trifluoromethanesulfonylimide) (made by KANTO CHEMICAL CO., INC.) |
| Ionic conductive agent 2-1 | 1-Butyl-3-methylimidazolium bis(trifluoromethanesulfonyl)imide (made by Tokyo Chemical Industry Co., Ltd.) |

[Preparation of Ionic conductive agents 1-3, 1-4 to 1-13, 2-2 to 2-4, 3-1, 4-1, 5-1 and 6-1]

First, compounds shown in Table 2 to Table 4 were provided as nucleophiles, electrophiles and anion exchange salts used in preparation of these ionic conductive agents.

[Table 2]

| Nucleophile | Name |
|---|---|
| N-1 | Triethanolamine (made by Tokyo Chemical Industry Co., Ltd.) |
| N-2 | 1-(2-Hydroxyethyl)imidazole (made by Sigma-Aldrich Corporation) |
| N-3 | 2-Pyrrolidin-2-yl-ethanol (made by Sigma-Aldrich Corporation) |
| N-4 | 2,2'-Thiodiethanol (made by Tokyo Chemical Industry Co., Ltd.) |
| N-5 | Tris(hydroxymethyl)phosphine (made by Sigma-Aldrich Corporation) |
| N-6 | Morpholine (made by Tokyo Chemical Industry Co., Ltd.) |
| N-7 | 4-Hydroxymethylimidazole (made by Sigma-Aldrich Corporation) |

[Table 3]

| Electrophile | Name |
|---|---|
| Q-1 | Iodomethane (made by Tokyo Chemical Industry Co., Ltd.) |
| Q-2 | 2-Bromoethanol (made by Tokyo Chemical Industry Co., Ltd.) |
| Q-3 | 3-Chloro-1,2-propanediol (made by Tokyo Chemical Industry Co., Ltd.) |

[Table 4]

| Anion exchange salt | Name |
|---|---|
| A-1 | (Lithium bis(trifluoromethanesulfonyl)imide) (made by KANTO CHEMICAL CO., INC.) |
| A-2 | Lithium trifluoromethanesulfonate (made by Wako Pure Chemical Industries, Ltd.) |

(continued)

| Anion exchange salt | Name |
|---|---|
| A-3 | Lithium trifluoroacetate (made by Wako Pure Chemical Industries, Ltd.) |
| A-4 | Potassi u m tris(trifluoromethanesulfonyl)methide (Trade name: K-TFSM: made by Central Glass Co., Ltd.) |
| A-5 | Sodium dicyanamide (made by Tokyo Chemical Industry Co., Ltd.) |
| A-6 | Potassi u m trifluoro(trifluoromethyl)borate (made by Tokyo Chemical Industry Co., Ltd.) |
| A-7 | Lithium hexafluorophosphate (made by Wako Pure Chemical Industries, Ltd.) |
| A-8 | Lithium hexafluoroantimonate (made by Wako Pure Chemical Industries, Ltd.) |
| A-9 | Potassium hexafluoroarsenate (made by Tokyo Chemical Industry Co., Ltd.) |
| A-10 | Lithium bis(oxalate)borate (Trade name: LiBOB; made by BOC Sciences Inc.) |
| A-11 | Potassium cyclo-hexafluoropropane-1,3-bis(sulfonyl)imide (Trade name: EF-N302; made by Mitsubishi Materials Electronic Chemicals Co., Ltd.) |

[Synthesis of Ionic conductive agent 1-3]

60 g of dimethylbis(2-hydroxyethyl)ammonium hydroxide (product name AH212, made by Yokkaichi Chemical Company Limited) was dissolved in 30 ml of dichloromethane. Subsequently, 48.2 g of an anion exchange salt "A-1" dissolved in 30 ml of water was added, and the resulting mixture was stirred at room temperature for 24 hours. The resulting solution was separated to extract an organic layer. The organic layer was separated with water twice, and dichloromethane was then distilled off under reduced pressure to yield Ionic conductive agent 1-3 having bis(trifluoromethanesulfonyl)imide as an anion.

[Synthesis of Ionic conductive agent 1-4]

33.0 g of a nucleophile "N-1" was dissolved in 50 ml of acetonitrile, and 47.2 g of an electrophile "Q-1" was added at room temperature. The solution was then refluxed with heating at 90°C for 72 hours. Subsequently, the solvent was distilled off under reduced pressure. The resulting concentrate was washed with diethyl ether, and the supernatant solution was removed through decantation. The operation of washing and decantation was repeated three times to yield a residue. The resulting residue is a compound having an iodide ion.

To exchange the iodide ion for the target anion, the resulting residue was dissolved in 30 ml of dichloromethane, and 76.3 g of an anion exchange salt "A-1" dissolved in 30 ml of water was then added, and the resulting mixture was stirred at room temperature for 24 hours. The resulting solution was separated to extract an organic layer. The organic layer was separated with water twice, and dichloromethane was then distilled off under reduced pressure to yield Ionic conductive agent 1-4 having bis(trifluoromethanesulfonyl)imide as an anion.

[Synthesis of Ionic conductive agent 4-1]

16.2 g of a nucleophile "N-6" was dissolved in 200 ml of benzene (made by KANTO CHEMICAL CO., INC.), and 30.7 g of an electrophile "Q-3" for tertiarization dissolved in 200 ml of benzene was added dropwise. The solution was refluxed with heating at 85°C for 42 hours. After the reaction was completed, 800 ml of an aqueous solution of 5% by mass sodium carbonate was added to extract the product. The benzene layer was washed with water and dried. Benzene was then distilled off to yield a tertiary amine compound as a yellow viscous liquid. The resulting tertiary amine compound was then dissolved in 300 ml of acetonitrile, and 35.0 g of an electrophile "Q-2" for quaternization was added at room temperature. The solution was then refluxed with heating at 90°C for 72 hours. Subsequently, the solvent was distilled off under reduced pressure. The resulting concentrate was washed with diethyl ether, and the supernatant solution was removed through decantation. This operation was repeated three times to yield a residue. The resulting residue is a compound having a bromide ion.

To exchange the bromide ion for the target anion, the resulting residue was dissolved in 20 ml of dichloromethane, 74.0 g of an anion exchange salt "A-11" dissolved in 20 ml of water was then added, and the resulting mixture was stirred at room temperature for 24 hours. The resulting solution was separated to extract an organic layer. The organic layer

was separated with water twice, and dichloromethane was distilled off under reduced pressure to yield Ionic conductive agent 4-1 having cyclo-hexafluoropropane-1,3-bis(sulfonyl)imide as an anion.

[Synthesis of Ionic conductive agents 1-5 to 1-13, 2-2, 2-3, 2-4, 3-1, 5-1 and 6-1]

The types of the nucleophiles, the electrophiles and the anion exchange salts are shown in Table 2 to Table 4. Ionic conductive agents 1-5 to 1-13,2-2, 2-3, 2-4, 3-1, 5-1 and 6-1 were prepared in the same manner as in synthesis of Ionic conductive agent 1-4 except that the types and the amounts of the nucleophiles, the electrophiles and the anion exchange salts used in synthesis of these ionic conductive agents were varied as shown in Table 5.

[Synthesis of Ionic conductive agent 7-1]

30 g of glycidyltrimethylammonium chloride (made by Sigma-Aldrich Corporation) was dissolved in 30 ml of dichloromethane, 68.0 g of an anion exchange salt "A-1" dissolved in 30 ml of water was added, and the resulting mixture was stirred at room temperature for 24 hours. The resulting solution was separated to extract an organic layer. The organic layer was separated with water twice, and dichloromethane was then distilled off under reduced pressure to yield Ionic conductive agent 7-1 having bis(trifluoromethanesulfonyl)imide as an anion.

[Table 5]

| Ionic conductive agent | Nucleophile | Amount added (g) | Electrophile | Amount added (g) | Anion exchange salt | Amount added (g) |
|---|---|---|---|---|---|---|
| Ionic conductive agent 1-4 | N-1 | 33.0 | Q-1 | 47.2 | A-1 | 76.3 |
| Ionic conductive agent 1-5 | N-1 | 33.0 | Q-1 | 47.2 | A-2 | 41.5 |
| Ionic conductive agent 1-6 | N-1 | 33.0 | Q-1 | 47.2 | A-3 | 31.9 |
| Ionic conductive agent 1-7 | N-1 | 33.0 | Q-1 | 47.2 | A-4 | 119.6 |
| Ionic conductive agent 1-8 | N-1 | 33.0 | Q-1 | 47.2 | A-5 | 23.7 |
| Ionic conductive agent 1-9 | N-1 | 33.0 | Q-1 | 47.2 | A-6 | 46.5 |
| Ionic conductive agent 1-10 | N-1 | 33.0 | Q-1 | 47.2 | A-7 | 40.4 |
| Ionic conductive agent 1-11 | N-1 | 33.0 | Q-1 | 47.2 | A-8 | 64.6 |
| Ionic conductive agent 1-12 | N-1 | 33.0 | Q-1 | 47.2 | A-9 | 60.6 |
| Ionic conductive agent 1-13 | N-1 | 33.0 | Q-1 | 47.2 | A-10 | 51.6 |
| Ionic conductive agent 2-2 | N-2 | 27.0 | Q-2 | 45.2 | A-1 | 83.0 |
| Ionic conductive agent 2-3 | N-7 | 17.6 | Q-2 | 67.2 | A-1 | 54.1 |
| Ionic conductive agent 2-4 | N-7 | 17.6 | Q-2 | 67.2 | - | - |
| Ionic conductive agent 3-1 | N-3 | 31.7 | Q-3 | 45.5 | A-5 | 29.4 |

(continued)

| Ionic conductive agent | Nucleophile | Amount added (g) | Electrophile | Amount added (g) | Anion exchange salt | Amount added (g) |
|---|---|---|---|---|---|---|
| Ionic conductive agent 4-1 | N-6 | 16.2 | Q-3/Q-2 | 30.7/35.0 | A-11 | 74.0 |
| Ionic conductive agent 5-1 | N-4 | 22.0 | Q-3 | 31.0 | A-7 | 34.3 |
| Ionic conductive agent 6-1 | N-5 | 22.0 | Q-3 | 47.8 | A-10 | 67.4 |

The structures of the ionic conductive agents used in the present Examples prepared through the above syntheses and purchase are shown in Formula (7) to Formula (12) below. The substituents, the reactive functional groups in the formulae, and the number thereof are shown in Table 6 below:

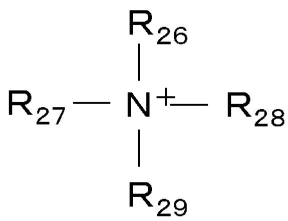

Formula (7)

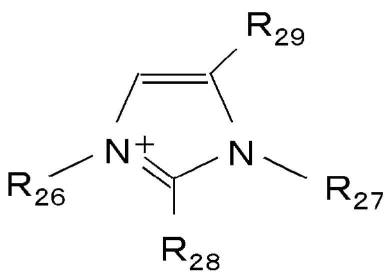

Formula (8)

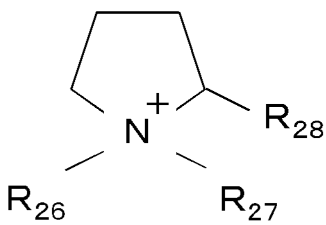

Formula (9)

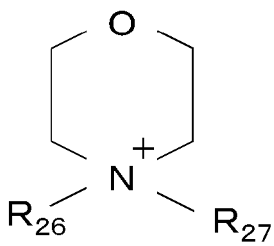

Formula (10)

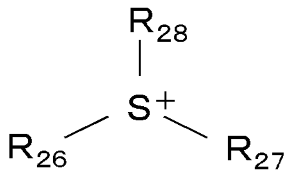

Formula (11)

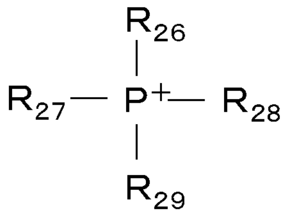

Formula (12)

[Table 6]

| Ionic conductive agent | Structure | Reactive functional group | The number of reactive functional groups | R26 | R27 | R28 | R29 | Anion |
|---|---|---|---|---|---|---|---|---|
| 1-1 | (7) | Hydroxyl group | 0 | C2H5 | C2H5 | C2H5 | C2H5 | $(CF_3SO_2)_2N$- |
| 1-2 | (7) | Hydroxyl group | 1 | $CH_3$ | $CH_3$ | $CH_3$ | $CH_2CH_2OH$ | $(CF_3SO_2)_2N$- |
| 1-3 | (7) | Hydroxyl group | 2 | $CH_3$ | $CH_3$ | $CH_2CH_2OH$ | $CH_2CH_2OH$ | $(CF_3SO_2)_2N$- |
| 1-4 | (7) | Hydroxyl group | 3 | $CH_3$ | $CH_2CH_2OH$ | $CH_2CH_2OH$ | $CH_2CH_2OH$ | $(CF_3SO_2)_2N$- |
| 1-5 | (7) | Hydroxyl group | 3 | $CH_3$ | $CH_2CH_2OH$ | $CH_2CH_2OH$ | $CH_2CH_2OH$ | $CF_3SO_{3^-}$ |
| 1-6 | (7) | Hydroxyl group | 3 | $CH_3$ | $CH_2CH_2OH$ | $CH_2CH_2OH$ | $CH_2CH_2OH$ | $CF_3COO$- |
| 1-7 | (7) | Hydroxyl group | 3 | $CH_3$ | $CH_2CH_2OH$ | $CH_2CH_2OH$ | $CH_2CH_2OH$ | $(CF_3SO_2)_3C$- |
| 1-8 | (7) | Hydroxyl group | 3 | $CH_3$ | $CH_2CH_2OH$ | $CH_2CH_2OH$ | $CH_2CH_2OH$ | $N(CN)_{2^-}$ |
| 1-9 | (7) | Hydroxyl group | 3 | $CH_3$ | $CH_2CH_2OH$ | $CH_2CH_2OH$ | $CH_2CH_2OH$ | BF3(C2F5)- |
| 1-10 | (7) | Hydroxyl group | 3 | $CH_3$ | $CH_2CH_2OH$ | $CH_2CH_2OH$ | $CH_2CH_2OH$ | $PF_{6^-}$ |
| 1-11 | (7) | Hydroxyl group | 3 | $CH_3$ | $CH_2CH_2OH$ | $CH_2CH_2OH$ | $CH_2CH_2OH$ | $SbF_{6^-}$ |
| 1-12 | (7) | Hydroxyl group | 3 | $CH_3$ | $CH_2CH_2OH$ | $CH_2CH_2OH$ | $CH_2CH_2OH$ | $AsF_{6^-}$ |
| 1-13 | (7) | Hydroxyl group | 3 | $CH_3$ | $CH_2CH_2OH$ | $CH_2CH_2OH$ | $CH_2CH_2OH$ | $(C_2O_4)B$- |
| 2-1 | (8) | Hydroxyl group | 0 | $C_4H_9$ | $CH_3$ | H | H | $(CF_3SO_2)_2N$- |

(continued)

| Ionic conductive agent | Structure | Reactive functional group | The number of reactive functional groups | R26 | R27 | R28 | R29 | Anion |
|---|---|---|---|---|---|---|---|---|
| 2-2 | (8) | Hydroxyl group | 2 | $CH_2CH_2OH$ | $CH_2CH_2OH$ | H | H | $(CF_3SO_2)_2N-$ |
| 2-3 | (8) | Hydroxyl group | 3 | $CH_2CH_2OH$ | H | $CH_2CH_2OH$ | $CH_2OH$ | $(CF_3SO_2)_2N-$ |
| 2-4 | (8) | Hydroxyl group | 3 | $CH_2CH_2OH$ | H | $CH_2CH_2OH$ | $CH_2OH$ | Cl- |
| 3-1 | (9) | Hydroxyl group | 5 | $CH_2CHOHCH_2OH$ | $CH_2CHOHCH_2OH$ | $CH_2CH_2OH$ | - | $N(CN)_2-$ |
| 4-1 | (10) | Hydroxyl group | 3 | $CH_2CHOHCH_2OH$ | $CH_2CH_2OH$ | - | - | $CF_2$ $(CF_2SO_2)_2N-$ |
| 5-1 | (11) | Hydroxyl group | 4 | $CH_2CH_2OH$ | $CH_2CH_2OH$ | $CH_2CHOHCH_2OH$ | - | $PF_6-$ |
| 6-1 | (12) | Hydroxyl group | 5 | $CH_2OH$ | $CH_2OH$ | $CH_2OH$ | $CH_2CHOHCH_2OH$ | $(C_2O_4)B-$ |
| 7-1 | (7) | Glycidyl group | 1 | $CH_3$ | $CH_3$ | $CH_3$ | $CH_2CHCHO$ | $(CF_3SO_2)_2N-$ |

<2. Properties of metal oxide>

The particle diameters of some metal oxides and the electronegativities thereof as metal ions are summarized in Table 7 below. Magnesium oxide and aluminium oxide are used according to the present invention.

[Table 7]

| Metal oxide | Name | Particle diameter (μm) | Electronegativity |
|---|---|---|---|
| A | Magnesium oxide (Product name: PUREMAG FNM-G; made by Tateho Chemical Industries Co., Ltd.) | 0.5 | 6.0 |
| B | Zinc oxide (Grade 2 for rubber;made by Sakai Chemical Industry Co., Ltd.) | 0.6 | 8.0 |
| C | Aluminum oxide (A-43-L;made by Showa Denko K.K.) | 1.4 | 10.5 |
| D | Aluminum oxide (A-43-M;made by Showa Denko K.K.) | 1.0 | 10.5 |
| E | Aluminum oxide (ASFP;made by DENKI KAGAKU KOGYO KABUSHIKI KAISHA (the current Denka Company Limited)) | 0.3 | 10.5 |
| F | Aluminum oxide (NP-AL2O3;Commercially available from EM Japan Co., Ltd.) | 0.1 | 10.5 |
| G | Iron oxide ($Fe_3O_4$) (Mady by Micromod Partikeltechnologie GmbH) | 0.3 | 11.4 |
| H | Titanium oxide (TA-100;made by Fuji Titanium Industry Co., Ltd.) | 0.6 | 13.5 |
| I | Silicon oxide (SO-E2;made by Admatechs Company Limited) | 0.5 | 16.2 |
| J | Yttrium oxide (Fine particle product 3N; made by Nippon Yttrium Co., Ltd.) | 0.8 | 8.4 |

<3. Production Example of compound a2> synthesis of isocyanate group-terminated prepolymer

100 parts by mass of poly(tetramethylene glycol-3-methyltetramethylene glycol) (trade name: PTG-L1000; made by Hodogaya Chemical Co., Ltd.) was gradually added dropwise to 19.7 parts by mass of polymeric MDI (trade name: Millionate MR200, made by Tosoh Corporation (the former Nippon Polyurethane Industry Co., Ltd.)) in a reaction container under a nitrogen atmosphere while the inner temperature of the reaction container was kept at 65°C. After dropwise addition was completed, these materials were reacted at temperature 65°C for 2 hours. The resulting reaction mixture was cooled to room temperature to yield an isocyanate group-terminated prepolymer having an isocyanate group content of 4.2%.

[Example 1]

[1. Preparation of elastic roller]

A primer (trade name, DY35-051; made by Dow Corning Toray Co., Ltd.) was applied to an SUS304 (JIS, stainless steel) electro-conductive substrate having a diameter of 6 mm and a length of 270.5 mm. The workpiece was heat treated in an oven heated to a temperature of 180°C for 20 minutes to prepare an electro-conductive substrate. The electroconductive substrate was placed in a metal mold, and an addition silicone rubber composition including a mixture of the materials shown in Table 8 below was injected into the cavity formed in the metal mold. Silica powder was used as a heat resistance imparting agent.

[Table 8]

| Materials | Parts by mass |
|---|---|
| Liquid silicone rubber material (Trade name, SE6724A/B; made by Dow Corning Toray Co., Ltd.) | 100 |
| Carbon black (Trade name, TOKABLACK#4300; made by TOKAI CARBON CO., LTD.) | 15 |

(continued)

| Materials | Parts by mass |
|---|---|
| Silica powder | 0.2 |
| Platinum catalyst | 0.1 |

The metal mold was then heated at 150°C for 15 minutes to vulcanize and cure silicone rubber. A cured silicone rubber layer was formed on the circumferential surface of the electro-conductive substrate. The substrate was removed from the metal mold and then further heated at a temperature of 180°C for one hour to complete the curing reaction of the silicone rubber layer. Elastic roller 1 including a silicone rubber layer having a diameter of 12 mm and a length of 237 mm in the longitudinal direction formed on the outer periphery of the electro-conductive substrate was thereby prepared.

[2. Preparation of coating material for elastic layer]

The materials for an elastic layer shown in the column of Component (1) of Table 9 below were mixed by stirring with a stirring motor for one hour to provide Mixed solution 1. Subsequently, other materials shown in the column of Component (2) of Table 9 were added to Mixed solution 1 (solid content: 100 parts by mass) to prepare Mixed solution 2. Crosslinked urethane beads were used as roughening particles.

[Table 9]

| | Materials | Parts by mass |
|---|---|---|
| Component (1) | Polyol (Trade name: PTG-L1000; made by Hodogaya Chemical Co., Ltd.) | 100 |
| | Isocyanate group-terminated prepolymer | 200 |
| | Methyl ethyl ketone (MEK) | 50 |
| Component (2) | Solid content of Component (1) | 100 |
| | Ionic conductive agent 1-2 | 1 |
| | Metal oxide A | 30 |
| | Crosslinked urethane beads (Trade name: C-400 Transparent; made by Negami chemical industrial co., ltd.) | 20 |

Another mixed solution containing the materials in the same proportion as that of Mixed solution 2 was separately prepared in advance, and 1.000 g of the mixed solution was placed in an aluminum cup and weighed. Subsequently, the mixed solution was heat treated on the same condition as that of the heat treatment described later (2 hours at 140°C in this Example). The aluminum cup was then again weighed to determine the amount of the residue in the aluminum cup. From the proportion, the solid content of the mixed solution was determined.

Mixed solution 2 was then dispersed for 2 hours under the conditions of a circumferential speed of 7 m/sec, a flow rate of 1.7 $cm^3/s$ and a temperature of a dispersion solution of 15°C with a horizontal dispersing machine (trade name: NVM-03, made by AIMEX Co., Ltd.) to prepare a dispersion solution. MEK was then added to the dispersion solution to adjust the solid content to 29% by mass such that the thickness of the elastic layer after coating was 10 μm. The dispersion solution was then filtered through a screen of 200 mesh to prepare a coating material for an elastic layer.

[3. Preparation of elastic layer]

A schematic view of a coating apparatus used in formation of the elastic layer in this Example is illustrated in FIG. 6. The coating apparatus includes an immersion tank 61. The immersion tank 61 has a cylindrical shape having an inner diameter of 16 mm and a depth such that the entire elastic roller can be sufficiently immersed. The immersion tank 61 is disposed with the axis thereof vertically aligned. The coating material for an elastic layer fed from a stirring tank 63 to the bottom of the immersion tank 61 by the solution feed pump 62 overflows from the upper end of the immersion tank 61 and is recovered by a solution receiver to return to the stirring tank 63. The coating apparatus includes a lift 64 disposed above the immersion tank and moving up and down a lift plate in the axis direction of the immersion tank. Such a structure enables the coating apparatus to move the elastic roller held by the lift plate into or away from

the immersion tank.

The elastic roller preliminarily surface treated with irradiation with ultraviolet light was moved downward into the immersion tank 61 at an entering rate of 100 mm/s. The entire elastic roller was immersed in the coating material for an elastic layer and suspended for 10 seconds. Subsequently, the elastic roller was moved upward under the conditions of an initial rate of 30 mm/s and the final rate of 20 mm/s over 20 seconds to form a coat on the outer periphery of the elastic roller. The coat was dried at room temperature for 10 minutes. The coat was then cured by heat treatment at a temperature of 140°C for 2 hours to prepare Developing roller 1.

[4. Measurement of cationic organic group]

Whether the cationic organic group in the elastic layer is contained in the polymer chain of the resin can be confirmed by analysis such as pyrolysis GC/MS, evolved gas analysis (EGA-MS), FT-IR or NMR.

The elastic layer prepared in this Example was analyzed with a pyrolysis apparatus (trade name: Pyrofoil Sampler JPS-700, made by Japan Analytical Industry Co., Ltd.) and a GC/MS apparatus (trade name: Focus GC/ISQ, made by Thermo Fisher Scientific Inc.) at a pyrolysis temperature of 590°C using helium as a carrier gas. As a result, the obtained fragment peaks confirmed that the cation of the ionic conductive agent was contained in the polymer chain of the resin.

The developing member prepared in Example 1 was evaluated for the following items.

[5. Evaluation of amount of deformation of developing member]

The developing member of the present Example was left under an environment at a temperature of 23°C and a relative humidity of 55% for 24 hours or more. Subsequently, measurement was performed according to the principle illustrated in FIG. 7. While the electro-conductive substrate of the developing member was held and was being rotated, the value of the deformation of the elastic layer at a position irradiated with laser light 72 was measured with a displacement meter 71 (LT-9010M; made by Keyence Corporation) at 360 positions with a pitch of 1° in one turn of the developing member. The thickness of the elastic layer at each phase was measured. At this time, a tape was applied onto a part of the developing member, as an example not limited thereto though, to figure out the measured phase later. In this state, the thickness of the elastic layer was figured out at 5 positions (positions 40 mm and 80 mm from both ends of the elastic layer and the central portion) of the developing member in the longitudinal direction.

Subsequently, the developing member was placed on a stainless steel (SUS) base, and a cylindrical metal member having a diameter of 6.0 mm was placed on the upper portion of the developing member. A load of 4.9 N was applied to both ends of the cylindrical member. In this state, the base, the developing member and the cylindrical member were fixed so as not to move and were left under an environment at a temperature of 23°C and a relative humidity of 55% for 72 hours. At this time, contact portions of the base, the developing member and the cylindrical member were fixed so as not to overlap with the above-described tape for aligning the phase applied to the developing member. The cylindrical member was removed from the developing member after 72 hours, and the developing member was left under the same environment for 12 hours.

Subsequently, the thickness of the elastic layer of the developing member was measured by the same method as above. In the data on the thicknesses of the elastic layer at phases of 360 positions, the thickness of the elastic layer at a phase in contact with the cylindrical metal member having a diameter of 6.0 mm was measured after the cylindrical metal member was removed from the elastic layer. The maximum value of the difference in thickness of the elastic layer before and after being in contact with the cylindrical metal member was defined as "amount of deformation". This operation was performed on 5 positions of the elastic layer in the longitudinal direction. The average of the amounts of deformation of the 5 positions was defined as the amount of deformation of the developing member. The results of the measurement were ranked as A to D according to the following criteria. The results are shown in Table 10.

A: The amount of deformation is less than 3 μm.
B: The amount of deformation is 3 μm or more and less than 5 μm.
C: The amount of deformation is 5 μm or more and less than 8 μm.
D: The amount of deformation is 8 μm or more.

[6. Evaluation of bleed in developing member]

The developing member was placed on an aluminum sheet. The developing member with the aluminum sheet was vertically sandwiched between flat metal plates and compressed such that the interval between the flat metal plates was 11.0 mm. In this state, the flat metal plates were fixed with screws or the like. The sample was left under an environment at a temperature of 40°C and a relative humidity of 30% for 12 hours. Subsequently, the relative humidity

was raised to 90% over 12 hours, and the environment was kept for 72 hours.

Subsequently, the relative humidity was lowered to 30% over 12 hours, and the flat metal plates were then released. The developing member was removed from the aluminum sheet, and the degree of cloudiness of the aluminum sheet contacting the developing member was visually observed. The results of observation were ranked as A to D according to the following criteria. The results are shown in Table 10.

A: No cloudiness is found on the aluminum sheet.
B: Slight cloudiness is found on the aluminum sheet.
C: Cloudiness is found on the aluminum sheet.
D: Clear boundary is found on the aluminum sheet between the contact region to the developing member and the non-contact region thereto.

[7. Evaluation of charge up of developing member]

The charge up of the developing member prepared was measured and evaluated by the following method. DRA-2000L (trade name, made by Quality Engineering Associates (QEA), Inc.) was used as apparatus for evaluation. The apparatus will be schematically described based on FIG. 8. The apparatus is provided with a head 83 composed of a corona discharger 81 and a probe 82 of a surface electrometer integrally formed. In the head 83, the discharge position of the corona discharger is located 25 mm from the center of the probe of the surface electrometer. This distance causes delay from the end of discharging to measurement according to the moving rate of the head. The head 83 can move parallel to the longitudinal direction of the developing member 84 disposed. The charges generated in the corona discharger 81 are emitted to the surface of the developing member 84.

The measurement is performed by the head 83 moving while performing corona discharge according to the following procedure:

(1) Charges are emitted from the corona discharger 81 to the surface of the developing member 84.
(2) The charges on the surface of the developing member 84 escape through the electro-conductive substrate 11 to a ground during delay until the probe 82 of the surface electrometer comes to the measurement position.
(3) The amount of residual charges on the surface of the developing member 84 is measured as a potential by the electrometer.

The degree of charge decay or charge up of the developing member 84 can be evaluated from the measurement.

The apparatus for evaluation and the developing member were left under a low temperature and low humidity environment, namely, an environment at a temperature of 10°C and a relative humidity of 10% for 24 hours or more to be sufficiently aged.

An SUS304 master having the same outer diameter as that of the developing member was placed in the DRA-2000L and short-circuited to a ground. The distance between the surface of the master and the probe of the surface electrometer was adjusted to 0.76 mm, and the surface electrometer was calibrated to zero. After calibration, the master was removed, and the developing member to be measured was placed in the DRA-2000L.

The measurement was performed at a bias of the corona discharger of 8 kV, a scanner moving rate of 400 mm/sec and a sampling interval of 0.5 mm or less. The data was collected from the central portion of the elastic layer of the developing member excluding regions 27.5 mm or less from both ends thereof. The measurement can be repeated 36 times at an interval of 10° to obtain the data on the potential attributed to residual charges of corona discharge in the measurement region. The data on the potential obtained is represented by a matrix of m rows and 36 columns composed of elements where the potential values obtained at the longitudinal direction of the developing member are represented along the longitudinal direction of the elements, and the potential values obtained at 10° increments at each phase are represented along the traverse direction of the elements. The numeric value of m is determined according to the sampling interval.

First, the values of all of the elements of the matrix obtained, that is, $m \times 36$ elements were arithmetically averaged. The average obtained was defined as the average potential of the developing member. The results of measurement were ranked as A to D according to the following criteria and shown in the table. The results are shown in Table 10.

A: The average potential is less than 5 V.
B: The average potential is 5 V or more and less than 10 V.
C: The average potential is 10 V or more and less than 15 V.
D: The average potential is 15 V or more.

[8. Evaluation of image]

After the measurement was performed, the developing member of the present invention was incorporated into the cyan cartridge of a laser printer (trade name: HP Laser Jet Enterprise Color M553dn, made by Hewlett-Packard Company) under the same environment as above to prepare a cartridge for an image output test. Subsequently, a solid image on the right of the upper half, a solid white image on the left of the upper half, and a halftone image in the lower half were output to evaluate the difference in density of the halftone image in the lower half. The results of observation of the image were ranked as A to D according to the following criteria. The results are shown in Table 10.

A: The halftone image has even density.
B: A difference in density between the left and the right in the halftone image is slightly found.
C: A difference in density between the left and the right in the halftone image is found.
D: A difference in density between the left and the right in the halftone image is clearly found.

[9. Evaluation of durability of developing member]

After the measurement was performed, an image having an adjusted coverage rate of 2% was continuously printed under the same environment as above until a cartridge exchange lamp of the laser printer turned on. After the cartridge exchange lamp turned on, 500 sheets of the image were further printed. The cartridge was then extracted to observe the surface of the developing member. The surface was observed at a magnification of x500 and evaluated focusing breakage or crack of the surface of the developing member. The results of evaluation were ranked as A to C according to the following criteria. The results are shown in Table 10.

A: No breakage or crack is found in the developing member.
B: Breakage or crack is found on both ends of the developing member out of the image region.
C: Breakage or crack is found in the image region of the developing member.

[Examples 3, 4, 6-17, 21-39, 41, 42 , 44-48 , 50-52, 54 and Reference Examples 2, 5, 18-20, 40, 43, 49 and 53]

Developing members 3, 4, 6-17, 21-39, 41, 42 , 44-48 , 50-52, 54 and Reference developing members 2,5, 18-20, 40, 43,49 and 53 were prepared by the same method as in Example 1 except that the types and the amounts of the ionic conductive agent and the metal oxide added were varied as shown in Table 10. The results of evaluation are shown in Table 10.

[Table 10]

| | Ionic conductive agent | | Metal oxide | | | Bleed | Deformation | Charge up | Evaluation of image | Durability |
|---|---|---|---|---|---|---|---|---|---|---|
| | Type | Amount added | Type | Electronegativity | Amount added | | | | | |
| Example 1 | 1-3 | 1 | A | 6.0 | 30 | A | B | A | A | A |
| Example 2 | 1-3 | 1 | B | 8.0 | 30 | A | B | A | A | A |
| Example 3 | 1-3 | 1 | E | 10.5 | 30 | A | B | B | B | A |
| Example 4 | 1-4 | 1 | A | 6.0 | 30 | A | A | A | A | A |
| Example 5 | 1-4 | 1 | B | 8.0 | 30 | A | A | A | A | A |
| Example 6 | 1-4 | 1 | E | 10.5 | 30 | A | A | B | B | A |
| Example 7 | 1-4 | 1 | F | 10.5 | 30 | A | A | A | A | A |
| Example 8 | 1-4 | 1 | D | 10.5 | 30 | A | A | B | B | A |
| Example 9 | 1-4 | 1 | C | 10.5 | 30 | A | A | B | B | B |
| Example 10 | 1-4 | 1 | E | 10.5 | 0.5 | A | A | C | C | A |
| Example 11 | 1-4 | 1 | E | 10.5 | 1 | A | A | B | B | A |
| Example 12 | 1-4 | 1 | E | 10.5 | 75 | A | A | A | A | B |
| Example 13 | 1-4 | 1 | E | 10.5 | 100 | A | A | A | A | C |
| Example 14 | 1-4 | 30 | E | 10.5 | 30 | B | A | A | A | A |
| Example 15 | 1-4 | 20 | E | 10.5 | 30 | B | A | A | A | A |
| Example 16 | 1-4 | 0.01 | E | 10.5 | 30 | A | A | A | A | A |
| Example 17 | 1-4 | 0.001 | E | 10.5 | 30 | A | A | C | C | A |
| Example 18 | 1-2 | 1 | A | 6.0 | 30 | B | B | A | A | A |
| Example 19 | 1-2 | 1 | B | 8.0 | 30 | B | B | A | A | A |
| Example 20 | 1-2 | 1 | E | 10.5 | 30 | B | B | B | B | A |
| Example 21 | 1-5 | 1 | A | 6.0 | 30 | A | A | A | A | A |
| Example 22 | 1-5 | 1 | E | 10.5 | 30 | A | A | B | B | A |
| Example 23 | 1-6 | 1 | A | 6.0 | 30 | A | A | A | A | A |
| Example 24 | 1-6 | 1 | E | 10.5 | 30 | A | A | B | B | A |
| Example 25 | 1-7 | 1 | A | 6.0 | 30 | A | A | A | A | A |
| Example 26 | 1-7 | 1 | E | 10.5 | 30 | A | A | B | B | A |
| Example 27 | 1-8 | 1 | A | 6.0 | 30 | B | A | A | A | A |
| Example 28 | 1-8 | 1 | E | 10.5 | 30 | B | A | B | B | A |
| Example 29 | 1-9 | 1 | A | 6.0 | 30 | A | A | A | A | A |
| Example 30 | 1-9 | 1 | E | 10.5 | 30 | A | A | B | B | A |
| Example 31 | 1-10 | 1 | A | 6.0 | 30 | A | A | A | A | A |
| Example 32 | 1-10 | 1 | E | 10.5 | 30 | A | A | B | B | A |
| Example 33 | 1-11 | 1 | A | 6.0 | 30 | A | A | A | A | A |
| Example 34 | 1-11 | 1 | E | 10.5 | 30 | A | A | B | B | A |
| Example 35 | 1-12 | 1 | A | 6.0 | 30 | A | A | A | A | A |
| Example 36 | 1-12 | 1 | E | 10.5 | 30 | A | A | B | B | A |
| Example 37 | 1-13 | 1 | A | 6.0 | 30 | A | A | A | A | A |
| Example 38 | 1-13 | 1 | E | 10.5 | 30 | A | A | B | B | A |
| Example 39 | 2-2 | 1 | A | 6.0 | 30 | A | B | A | A | A |
| Example 40 | 2-2 | 1 | B | 8.0 | 30 | A | B | A | A | A |
| Example 41 | 2-2 | 1 | E | 10.5 | 30 | A | B | B | B | A |

[Table 10] (Cont'd)

| | Ionic conductive agent | | Metal oxide | | | Bleed | Deformation | Charge up | Evaluation of image | Durability |
|---|---|---|---|---|---|---|---|---|---|---|
| | Type | Amount added | Type | Electronegativity | Amount added | | | | | |
| Example 42 | 2-3 | 1 | A | 6.0 | 30 | A | A | A | A | A |
| Example 43 | 2-3 | 1 | B | 8.0 | 30 | A | A | A | A | A |
| Example 44 | 2-3 | 1 | E | 10.5 | 30 | A | A | A | A | A |
| Example 45 | 3-1 | 1 | E | 10.5 | 30 | B | A | A | A | A |
| Example 46 | 4-1 | 1 | E | 10.5 | 30 | A | A | A | A | A |
| Example 47 | 5-1 | 1 | E | 10.5 | 30 | A | A | B | B | A |
| Example 48 | 6-1 | 1 | E | 10.5 | 30 | A | A | B | B | A |
| Example 49 | 7-1 | 1 | E | 10.5 | 30 | A | B | B | B | A |
| Example 50 | 1-4 | 20 | A | 6.0 | 30 | A | A | A | A | B |
| Example 51 | 1-4 | 20 | A | 6.0 | 30 | A | A | A | A | B |
| Example 52 | 1-4 | 20 | A | 6.0 | 30 | A | A | A | A | B |
| Example 53 | 1-3 | 1 | J | 8.4 | 30 | A | B | A | A | A |

Examples 2, 5, 18-20, 40, 43, 49 and 53 are Reference Examples

[Example 50]

The materials for an elastic layer shown in the column of Component (1) of Table 11 below were mixed with stirring by a stirring motor for one hour to provide a mixed solution. Subsequently, other materials shown in the column of Component (2) of Table 11 were added to the mixed solution (solid content: 100 parts by mass) to prepare Mixed solution 2", Crosslinked urethane beads were used as roughening particles. Except for these, Developing member 50 was prepared and evaluated in the same manner as in Example 1. The results of evaluation are shown in Table 10.

[Table 11]

| | Materials | Parts by mass |
|---|---|---|
| Component (1) | Terephthalic acid (made by Tokyo Chemical Industry Co., Ltd.) | 100 |
| | Methyl ethyl ketone (MEK) | 500 |
| Component (2) | Solid content of Component (1) | 100 |
| | Ionic conductive agent 1-4 | 20 |
| | Metal oxide A | 30 |
| | Crosslinked urethane beads (Trade name: C-400 Transparent; made by Negami chemical industrial co., ltd.) | 20 |

[Example 51]

Developing member 51 was prepared and evaluated in the same manner as in Example 50 except that terephthalic acid was replaced with 2,4,6-tris[bis (methoxymethyl)amino] - 1,3,5-triazine. The results of evaluation are shown in Table 10.

[Example 52]

Developing member 52 was prepared and evaluated in the same manner as in Example 50 except that terephthalic acid was replaced with 2,2-bis (4-glycidyloxyphenyl)propane. The results of evaluation are shown in Table 10.

[Reference Example 53, Comparative Examples 1 to 39]

Reference Developing member 53 and Developing members C1 to C39 were prepared and evaluated in the same manner as in Example 1 except that the types and the amounts of the ionic conductive agent and the metal oxide added were varied as shown in Table 10 or Table 12. The results of evaluation are shown in Table 10 or Table 12.

[Table 12]

| | Ionic conductive agent | | Metal oxide | | | Bleed | Deformation | Charge up | Evaluation of image | Durability |
|---|---|---|---|---|---|---|---|---|---|---|
| | Type | Amount added | Type | Electronegativity | Amount added | | | | | |
| Comparative Example 1 | 1-1 | 1 | A | 6.0 | 30 | D | D | A | A | A |
| Comparative Example 2 | 1-1 | 1 | B | 8.0 | 30 | D | D | A | A | A |
| Comparative Example 3 | 1-1 | 1 | E | 10.5 | 30 | D | D | A | A | A |
| Comparative Example 4 | 1-2 | 1 | G | 11.4 | 30 | A | B | D | D | A |
| Comparative Example 5 | 1-2 | 1 | H | 13.5 | 30 | A | B | D | D | A |
| Comparative Example 6 | 1-2 | 1 | I | 16.2 | 30 | A | B | D | D | A |
| Comparative Example 7 | 1-3 | 1 | G | 11.4 | 30 | A | B | D | D | A |
| Comparative Example 8 | 1-3 | 1 | H | 13.5 | 30 | A | B | D | D | A |
| Comparative Example 9 | 1-3 | 1 | I | 16.2 | 30 | A | B | D | D | A |
| Comparative Example 10 | 1-4 | 1 | G | 11.4 | 30 | A | A | D | D | A |
| Comparative Example 11 | 1-4 | 1 | H | 13.5 | 30 | A | A | D | D | A |
| Comparative Example 12 | 1-4 | 1 | I | 16.2 | 30 | A | A | D | D | A |
| Comparative Example 13 | 1-5 | 1 | H | 13.5 | 30 | A | A | D | D | A |
| Comparative Example 14 | 1-6 | 1 | H | 13.5 | 30 | A | A | D | D | A |
| Comparative Example 15 | 1-7 | 1 | H | 13.5 | 30 | A | A | D | D | A |
| Comparative Example 16 | 1-8 | 1 | H | 13.5 | 30 | B | A | D | D | A |
| Comparative Example 17 | 1-9 | 1 | H | 13.5 | 30 | A | A | D | D | A |
| Comparative Example 18 | 1-10 | 1 | H | 13.5 | 30 | A | A | D | D | A |
| Comparative Example 19 | 1-11 | 1 | H | 13.5 | 30 | A | A | D | D | A |
| Comparative Example 20 | 1-12 | 1 | H | 13.5 | 30 | A | A | D | D | A |
| Comparative Example 21 | 1-13 | 1 | H | 13.5 | 30 | A | A | D | D | A |
| Comparative Example 22 | 2-1 | 1 | A | 6.0 | 30 | D | D | A | A | A |
| Comparative Example 23 | 2-1 | 1 | B | 8.0 | 30 | D | D | A | A | A |
| Comparative Example 24 | 2-1 | 1 | E | 10.5 | 30 | D | D | A | A | A |
| Comparative Example 25 | 2-2 | 1 | G | 11.4 | 30 | A | A | D | D | A |

[Table 12] (Cont'd)

| | Ionic conductive agent | | Metal oxide | | | Bleed | Deformation | Charge up | Evaluation of image | Durability |
|---|---|---|---|---|---|---|---|---|---|---|
| | Type | Amount added | Type | Electronegativity | Amount added | | | | | |
| Comparative Example 26 | 2-2 | 1 | H | 13.5 | 30 | A | A | D | D | A |
| Comparative Example 27 | 2-2 | 1 | I | 16.2 | 30 | A | A | D | D | A |
| Comparative Example 28 | 2-3 | 1 | G | 11.4 | 30 | A | A | D | D | A |
| Comparative Example 29 | 2-3 | 1 | H | 13.5 | 30 | A | A | D | D | A |
| Comparative Example 30 | 2-3 | 1 | I | 16.2 | 30 | A | A | D | D | A |
| Comparative Example 31 | 2-4 | 1 | A | 6.0 | 30 | C | D | B | B | A |
| Comparative Example 32 | 2-4 | 1 | B | 8.0 | 30 | C | D | B | B | A |
| Comparative Example 33 | 2-4 | 1 | E | 10.5 | 30 | C | D | B | B | A |
| Comparative Example 34 | 3-1 | 1 | H | 13.5 | 30 | B | A | D | D | A |
| Comparative Example 35 | 4-1 | 1 | H | 13.5 | 30 | A | A | D | D | A |
| Comparative Example 36 | 5-1 | 1 | H | 13.5 | 30 | A | A | D | D | A |
| Comparative Example 37 | 6-1 | 1 | H | 13.5 | 30 | A | A | D | D | A |
| Comparative Example 38 | 7-1 | 1 | H | 13.5 | 30 | A | B | D | D | A |
| Comparative Example 39 | - | - | A | 6.0 | 30 | B | B | D | D | A |

Comparison between Examples 1, 3, 4, 6, 39, 41 & 42, Reference Examples 5 ,19 & 43 and Comparative Examples 1 to 3 and 22 to 24 reveals that the evaluation of bleed and that of charge up are significantly varied according to the presence or absence of the reactive functional group of the ionic conductive agent. This suggests that the cation fixed to the binder resin is significantly effective in preventing bleed while conductivity needed for prevention of charge up is difficult to ensure in the evaluation using a high-speed apparatus at low temperature and low humidity. In these Examples, the number of reactive functional groups is varied. The results also show that bleed and deformation are much more improved as the number of reactive functional groups increases.

Furthermore, metal oxides having electronegativities of more than 11.0 as metal ions are used in Comparative

Examples A to 12 and 25 to 30. The results show that these metal oxides do not provide the effect of preventing charge up. The results further show that charge up is not improved in Comparative Example 39 using only a particle containing a metal oxide having a low electronegativity without using the ionic conductive agent.

The results show that although charge up can be prevented through selection of the metal oxide focusing the electronegativity, $OH^-$ groups generated from the metal oxide demonstrate the advantageous effects of the present invention by a combination of the anion of the ionic conductive agent, and the advantageous effects of the present invention are not obtained by one of the metal oxide and the anion of the ionic conductive agent.

Comparison of the Examples 21 to 38, 45 to 48 and Reference Example 49 in which the structures of ionic conductive agents and types of anion are altered, with Comparative Examples 13 to 21 and 34 to 38 reveals that similar effects of the metal oxide of preventing charge up are demonstrated.

Comparison of Examples 42, 44 and Reference Example 43 with Comparative Examples 31 to 33 also reveals that in spite of the cation fixed to the binder resin, use of anions having lower molecular weights results in poor effects of preventing bleed and deformation, and the advantageous effects of the present invention are not sufficiently demonstrated.

The particle diameter of the metal oxide particles used in Examples 6 to 9 is varied. The results suggest that metal oxide particles having a smaller particle diameter have a larger effect of preventing charge up. It is believed that metal oxide particles having a smaller particle diameter have a larger surface area of the metal oxide particles, resulting in generation of a larger amount of $OH^-$ groups to ensure the electro-conductivity of the developing member.

while the present invention has been described with reference to exemplary embodiments, it is to be understood that the invention is not limited to the disclosed exemplary embodiments. The scope of the following claims is to be accorded the broadest interpretation so as to encompass all such modifications and functions.

## Claims

**1.** A developing member, comprising:

an electro-conductive substrate; and
an elastic layer disposed on the electro-conductive substrate,
the elastic layer comprising a binder resin, an anion and particles containing a metal oxide,
the binder resin comprising a resin having a cationic organic group in the polymer chain,
the anion being at least one selected from the group consisting of a fluorinated sulfonate anion, a fluorinated carboxylate anion, a fluorinated sulfonylimide anion, a fluorinated sulfonylmethide anion, a dicyanamide anion, a fluorinated alkylfluoroborate anion, a fluorinated phosphate anion, a fluorinated antimonate anion, a fluorinated arsenate anion and a bis(oxalate)borate anion,
the metal oxide is an oxide of a metal having an electronegativity of 11.0 or less as a metal ion, wherein the metal oxide is selected from the group consisting of aluminum oxide and magnesium oxide, and
the cationic organic group has at least one structure selected from the group consisting of structures represented by the following Formulae (1) to (6):

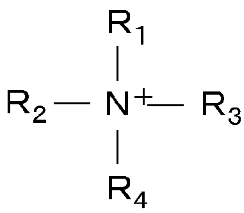

Formula (1)

where $R_1$ to $R_4$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; at least two of $R_1$ to $R_4$ is a structure including a moiety bonded to a polymer chain through one bond selected from the group consisting of an ether bond, an ester bond and a urethane bond;

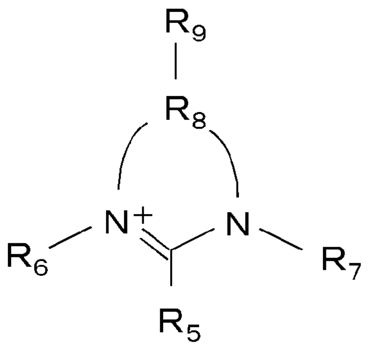

Formula (2)

where $R_5$ to $R_7$ and $R_9$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; $R_8$ is a hydrocarbon group having 1 to 3 carbon atoms and may contain a heteroatom; at least two of $R_5$ to $R_7$ and $R_9$ is a structure including a moiety bonded to a polymer chain through one bond selected from the group consisting of an ether bond, an ester bond and a urethane bond;

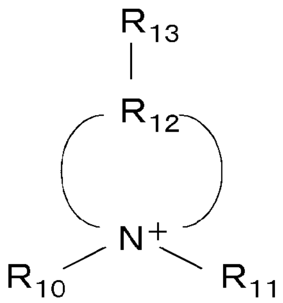

Formula (3)

where $R_{10}$, $R_{11}$ and $R_{13}$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; $R_{12}$ is a hydrocarbon group having 3 to 5 carbon atoms and may have an oxygen atom or a sulfur atom; at least two of $R_{10}$, $R_{11}$ and $R_{13}$ is a structure including a moiety bonded to a polymer chain through one bond selected from the group consisting of an ether bond, an ester bond and a urethane bond;

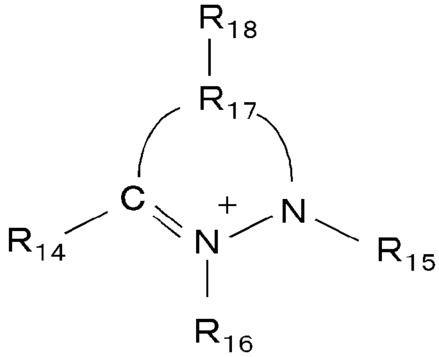

Formula (4)

where $R_{14}$ to $R_{16}$ and $R_{18}$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; $R_{17}$ is a hydrocarbon group having 1 to 3 carbon atoms and may contain a heteroatom; at least two of $R_{14}$ to $R_{16}$ and $R_{18}$ is a structure including a moiety bonded to a polymer chain through one bond selected from the group consisting of an ether bond, an

ester bond and a urethane bond;

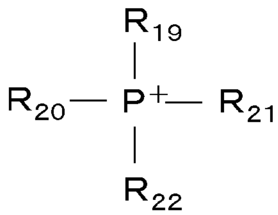

Formula (5)

where $R_{19}$ to $R_{22}$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; at least two of $R_{19}$ to $R_{22}$ is a structure including a moiety bonded to a polymer chain through one bond selected from the group consisting of an ether bond, an ester bond and a urethane bond;

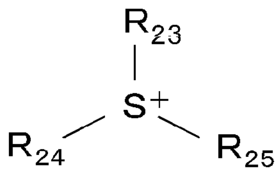

Formula (6)

where $R_{23}$ to $R_{25}$ each independently represent a hydrogen atom, a hydrocarbon group having 1 to 30 carbon atoms, or a structure including a moiety bonded to a polymer chain through one bond selected from the group consisting of an ether bond, an ester bond and a urethane bond; at least two of $R_{23}$ to $R_{25}$ is a structure including a moiety bonded to a polymer chain through one bond selected from the group consisting of an ether bond, an ester bond and a urethane bond.

**2.** The developing member according to claim 1, wherein the resin having a cationic organic group in the polymer chain is a resin having three or more moieties each having the cationic organic group bonded to the polymer chain through one bond selected from the group consisting of an ether bond, an ester bond and a urethane bond.

**3.** A method of producing the developing member according to claim 1 or 2, the method comprising:

(1) forming a coat composed of a coating material for forming an elastic layer on an electro-conductive substrate, the coating material comprising a binder resin raw material containing a cation having a reactive functional group, an anion and a compound having a functional group reactive with the reactive functional group, and particles containing aluminium oxide or magnesium oxide being an oxide of a metal having an electronegativity of 11.0 or less as a metal ion; and
(2) forming an elastic layer comprising the binder resin and the particles by reacting the reactive functional group of the cation with the functional group of the compound in the coat, and reacting the binder resin raw material in the coat to prepare a binder resin having the cation introduced into the molecule,
the anion being at least one selected from the group consisting of a fluorinated sulfonate anion, a fluorinated carboxylate anion, a fluorinated sulfonylimide anion, a fluorinated sulfonylmethide anion, a dicyanamide anion, a fluorinated alkylfluoroborate anion, a fluorinated phosphate anion, a fluorinated antimonate anion, a fluorinated arsenate anion and a bis(oxalate)borate anion.

**4.** The method of producing the developing member according to claim 3, wherein the reactive functional group is a hydroxy group.

**5.** The method of producing the developing member according to claim 3 or 4, wherein the cation is at least one selected from the group consisting of a quaternary ammonium cation having at least three reactive functional groups and a nitrogen-containing heterocyclic cation having at least three reactive functional groups.

**6.** The method of producing the developing member according to claim 3 or 4, wherein the cation is an imidazolium

cation having at least three reactive functional groups.

7. The method of producing the developing member according to any one of claims 3 to 6, wherein the compound is at least one selected from the group consisting of compounds having an isocyanate group, a carboxyl group or an epoxy group, and melamine.

8. A process cartridge detachably mountable on the main body of an electrophotographic image forming apparatus, the process cartridge comprising a developing device, the developing device comprising the developing member according to claim 1 or 2.

9. An electrophotographic image forming apparatus comprising an image bearing member carrying an electrostatic latent image, a charging device charging the image bearing member, an exposing device forming an electrostatic latent image on the charged image bearing member, a developing device developing the electrostatic latent image with a toner to form a toner image, a transferring device transferring the toner image onto a transfer material, and a fixing device fixing the toner image transferred onto the transfer material,
the developing device comprising the developing member according to claim 1 or 2.

## Patentansprüche

1. Entwicklungselement umfassend:

ein elektrisch leitfähiges Substrat; und
eine elastische Schicht, die an dem elektrisch leitfähigen Substrat angeordnet ist,
wobei die elastische Schicht ein Bindemittelharz, ein Anion und Teilchen, die ein Metalloxid enthalten, umfasst,
wobei das Bindemittelharz ein Harz mit einer kationischen organischen Gruppe in der Polymerkette umfasst,
wobei das Anion zumindest eines ist ausgewählt aus der Gruppe bestehend aus einem fluorierten Sulfonatanion, einem fluorierten Carboxylatanion, einem fluorierten Sulfonylimidanion, einem fluorierten Sulfonylmethidanion, einem Dicyanamidanion, einem fluorierten Alkylfluoroboratanion, einem fluorierten Phosphatanion, einem fluorierten Antimonatanion, einem fluorierten Arsenatanion und einem Bis(oxalat)boratanion,
wobei das Metalloxid ein Oxid eines Metalls mit einer Elektronegativität von 11,0 oder weniger als ein Metallion ist, wobei
das Metalloxid ausgewählt ist aus der Gruppe bestehend aus Aluminiumoxid und Magnesiumoxid, und
die kationische organische Gruppe zumindest eine Struktur aufweist ausgewählt aus der Gruppe bestehend aus Strukturen, die durch die folgenden Formeln (1) bis (6) dargestellt sind:

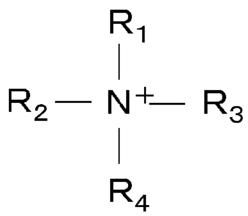

Formel (1)

in der $R_1$ bis $R_4$ jeweils unabhängig voneinander darstellen ein Wasserstoffatom, eine Kohlenwasserstoffgruppe mit 1 bis 30 Kohlenstoffatomen, oder eine Struktur, die einen Teil beinhaltet, der an eine Polymerkette gebunden ist durch eine Bindung ausgewählt aus der Gruppe bestehend aus einer Etherbindung, einer Esterbindung und einer Urethanbindung; zumindest zwei aus $R_1$ bis $R_4$ eine Struktur sind, die einen Teil beinhaltet, der an eine Polymerkette gebunden ist durch eine Bindung ausgewählt aus der Gruppe bestehend aus einer Etherbindung, einer Esterbindung und einer Urethanbindung;

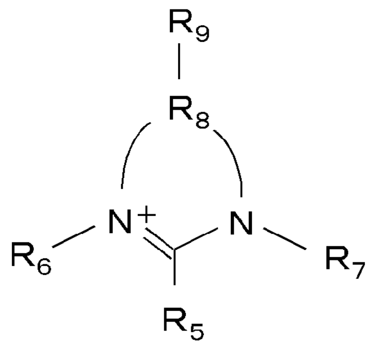

Formel (2)

in der $R_5$ bis $R_7$ und $R_9$ jeweils unabhängig voneinander darstellen ein Wasserstoffatom, eine Kohlenwasserstoffgruppe mit 1 bis 30 Kohlenstoffatomen, oder eine Struktur, die einen Teil beinhaltet, der an eine Polymerkette gebunden ist durch eine Bindung ausgewählt aus der Gruppe bestehend aus einer Etherbindung, einer Esterbindung und einer Urethanbindung; $R_8$ eine Kohlenwasserstoffgruppe mit 1 bis 3 Kohlenstoffatomen ist und ein Heteroatom enthalten kann; zumindest zwei aus $R_5$ bis $R_7$ und $R_9$ eine Struktur sind, die einen Teil beinhaltet, der an eine Polymerkette gebunden ist durch eine Bindung ausgewählt aus der Gruppe bestehend aus einer Etherbindung, einer Esterbindung und einer Urethanbindung;

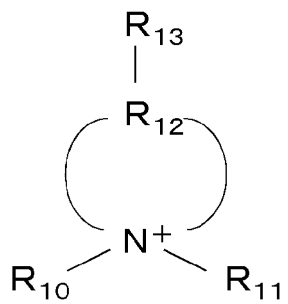

Formel (3)

in der $R_{10}$, $R_{11}$ und $R_{13}$ jeweils unabhängig voneinander darstellen ein Wasserstoffatom, eine Kohlenwasserstoffgruppe mit 1 bis 30 Kohlenstoffatomen, oder eine Struktur, die einen Teil beinhaltet, der an eine Polymerkette gebunden ist durch eine Bindung ausgewählt aus der Gruppe bestehend aus einer Etherbindung, einer Esterbindung und einer Urethanbindung; $R_{12}$ eine Kohlenwasserstoffgruppe mit 3 bis 5 Kohlenstoffatomen ist und ein Sauerstoffatom oder ein Schwefelatom aufweisen kann; zumindest zwei aus $R_{10}$, $R_{11}$ und $R_{13}$ eine Struktur sind, die einen Teil beinhaltet, der an eine Polymerkette gebunden ist durch eine Bindung ausgewählt aus der Gruppe bestehend aus einer Etherbindung, einer Esterbindung und einer Urethanbindung;

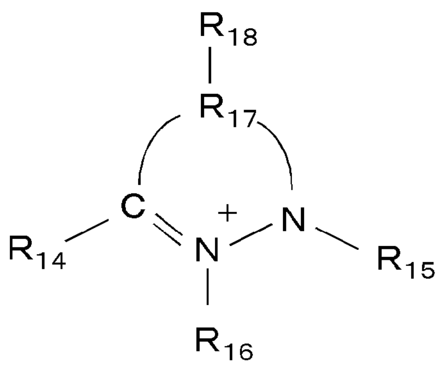

Formel (4)

in der $R_{14}$ bis $R_{16}$ und $R_{18}$ jeweils unabhängig voneinander darstellen ein Wasserstoffatom, eine Kohlenwasserstoffgruppe mit 1 bis 30 Kohlenstoffatomen, oder eine Struktur, die einen Teil beinhaltet, der an eine Polymerkette gebunden ist durch eine Bindung ausgewählt aus der Gruppe bestehend aus einer Etherbindung,

einer Esterbindung und einer Urethanbindung; $R_{17}$ eine Kohlenwasserstoffgruppe mit 1 bis 3 Kohlenstoffatomen ist und ein Heteroatom enthalten kann; zumindest zwei aus $R_{14}$ bis $R_{16}$ und $R_{18}$ eine Struktur sind, die einen Teil beinhaltet, der an eine Polymerkette gebunden ist durch eine Bindung ausgewählt aus der Gruppe bestehend aus einer Etherbindung, einer Esterbindung und einer Urethanbindung;

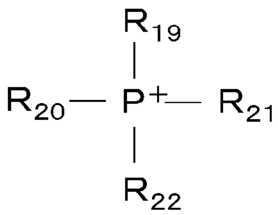

Formel (5)

in der $R_{19}$ bis $R_{22}$ jeweils unabhängig voneinander darstellen ein Wasserstoffatom, eine Kohlenwasserstoffgruppe mit 1 bis 30 Kohlenstoffatomen, oder eine Struktur, die einen Teil beinhaltet, der an eine Polymerkette gebunden ist durch eine Bindung ausgewählt aus der Gruppe bestehend aus einer Etherbindung, einer Esterbindung und einer Urethanbindung; zumindest zwei aus $R_{19}$ bis $R_{22}$ eine Struktur sind, die einen Teil beinhaltet, der an eine Polymerkette gebunden ist durch eine Bindung ausgewählt aus der Gruppe bestehend aus einer Etherbindung, einer Esterbindung und einer Urethanbindung;

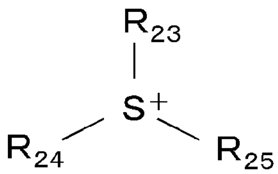

Formel (6)

in der $R_{23}$ bis $R_{25}$ jeweils unabhängig voneinander darstellen ein Wasserstoffatom, eine Kohlenwasserstoffgruppe mit 1 bis 30 Kohlenstoffatomen, oder eine Struktur, die einen Teil beinhaltet, der an eine Polymerkette gebunden ist durch eine Bindung ausgewählt aus der Gruppe bestehend aus einer Etherbindung, einer Esterbindung und einer Urethanbindung; zumindest zwei aus $R_{23}$ bis $R_{25}$ eine Struktur sind, die einen Teil beinhaltet, der an eine Polymerkette gebunden ist durch eine Bindung ausgewählt aus der Gruppe bestehend aus einer Etherbindung, einer Esterbindung und einer Urethanbindung.

**2.** Entwicklungselement gemäß Anspruch 1, wobei das Harz mit einer kationischen organischen Gruppe in der Polymerkette ein Harz mit drei oder mehr Teilen ist, die jeweils die kationische organische Gruppe als an die Polymerkette durch eine Bindung ausgewählt aus der Gruppe bestehend aus einer Etherbindung, einer Esterbindung und einer Urethanbindung gebunden aufweisen.

**3.** Verfahren zum Herstellen des Entwicklungselements gemäß Anspruch 1 oder 2, wobei das Verfahren umfasst:

(1) das Bilden einer Beschichtung, die aus einem Beschichtungsmaterial zum Bilden einer elastischen Schicht auf einem elektrisch leitfähigen Substrat zusammengesetzt ist, wobei das Beschichtungsmaterial ein Bindemittelharz-Rohmaterial, das ein Kation mit einer reaktiven funktionellen Gruppe, ein Anion und eine Verbindung mit einer funktionellen Gruppe enthält, die reaktiv mit der reaktiven funktionellen Gruppe ist, und Teilchen umfasst, die Aluminiumoxid oder Magnesiumoxid als ein Oxid eines Metalls mit einer Elektronegativität von 11,0 oder weniger als ein Metallion enthält; und
(2) das Bilden einer elastischen Schicht, die das Bindemittelharz und die Teilchen umfasst, durch Reagieren der reaktiven funktionellen Gruppe der Verbindung in der Beschichtung, und Reagieren des Bindemittelharz-Rohmaterials in der Beschichtung, um ein Bindemittelharz zuzubereiten, das das Kation in das Molekül eingeführt aufweist,
wobei das Anion zumindest eines ist ausgewählt aus der Gruppe bestehend aus einem fluorierten Sulfonatanion, einem fluorierten Carboxylatanion, einem fluorierten Sulfonylimidanion, einem fluorierten Sulfonylmethidanion, einem Dicyanamidanion, einem fluorierten Alkylfluoroboratanion, einem fluorierten Phosphatanion, einem fluorierten Antimonatanion, einem fluorierten Arsenatanion und einem Bis(oxalat)boratanion.

4. Verfahren zum Herstellen des Entwicklungselements gemäß Anspruch 3, wobei die reaktive funktionelle Gruppe eine Hydroxygruppe ist.

5. Verfahren zum Herstellen des Entwicklungselements gemäß Anspruch 3 oder 4, wobei das Kation zumindest eines ausgewählt aus der Gruppe bestehend aus einem quarternären Ammoniumkation mit zumindest drei reaktiven funktionellen Gruppen und einem Stickstoff-enthaltenden heterozyklischen Kation mit zumindest drei reaktiven funktionellen Gruppen ist.

6. Verfahren zum Herstellen des Entwicklungselements gemäß Anspruch 3 oder 4, wobei das Kation ein Imidazoliumkation mit zumindest drei reaktiven funktionellen Gruppen ist.

7. Verfahren zum Herstellen des Entwicklungselements gemäß einem der Ansprüche 3 bis 6, wobei die Verbindung zumindest eine ausgewählt aus der Gruppe bestehend aus Verbindungen mit einer Isocyanatgruppe, einer Carboxylgruppe oder einer Epoxygruppe, und Melamin ist.

8. Prozesskartusche abnehmbar montierbar an den Hauptkörper einer elektrophotographischen bildbildenden Vorrichtung,
wobei die Prozesskartusche ein Entwicklungsgeräts umfasst, wobei das Entwicklungsgerät das Entwicklungselement gemäß Anspruch 1 oder 2 umfasst.

9. Elektrophotographische bildbildende Vorrichtung, die umfasst ein bildtragendes Element, das ein elektrostatisches Latentbild trägt, ein Ladegerät, das das bildtragende Element lädt, ein Belichtungsgerät, das ein elektrostatisches Latentbild an dem geladenen bildtragenden Element bildet, ein Entwicklungsgerät, das das elektrostatische Latentbild mit einem Toner entwickelt, um ein Tonerbild zu bilden, ein Transfergerät, das das Tonerbild auf ein Transfermaterial transferiert, und ein Fixiergerät, das das Tonerbild, das auf das Transfermaterial transferiert ist, fixiert,
wobei das Entwicklungsgerät das Entwicklungselement gemäß Anspruch 1 oder 2 umfasst.

**Revendications**

1. Élément de développement, comprenant :

un substrat électro-conducteur ; et
une couche élastique disposée sur le substrat électro-conducteur,
la couche élastique comprenant une résine liante, un anion et des particules contenant un oxyde métallique,
la résine liante comprenant une résine comportant un groupe organique cationique dans la chaîne polymère,
l'anion étant au moins l'un sélectionné dans le groupe constitué d'un anion sulfonate fluoré, d'un anion carboxylate fluoré, d'un anion sulfonylimide fluoré, d'un anion sulfonylméthylure fluoré, d'un anion dicyanamide, d'un anion alkylfluoroborate fluoré, d'un anion phosphate fluoré, d'un anion antimoniate fluoré, d'un anion arséniate fluoré et d'un anion bis(oxalate)borate,
l'oxyde métallique est un oxyde d'un métal ayant une électronégativité inférieure ou égale à 11,0 en tant qu'ion métallique, où
l'oxyde métallique est sélectionné dans le groupe consistant en oxyde d'aluminium et oxyde de magnésium, et
le groupe organique cationique a au moins une structure sélectionnée dans le groupe constitué de structures représentées par les formules suivantes (1) à (6) :

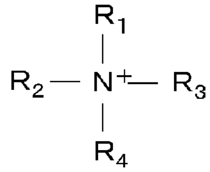

Formule (1)

où $R_1$ à $R_4$ représentent chacun indépendamment un atome d'hydrogène, un groupe hydrocarboné comportant 1 à 30 atomes de carbone, ou une structure comprenant un groupement lié à une chaîne polymère par l'intermédiaire d'une liaison sélectionnée dans le groupe constitué d'une liaison éther, d'une liaison ester et d'une liaison uréthane ; au moins deux parmi $R_1$ à $R_4$ sont une structure comprenant un groupement lié à une chaîne polymère par l'intermédiaire d'une liaison sélectionnée dans le groupe constitué d'une liaison éther, d'une liaison

ester et d'une liaison uréthane ;

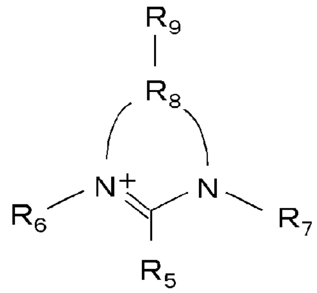

Formule (2)

où $R_5$ à $R_7$ et $R_9$ représentent chacun indépendamment un atome d'hydrogène, un groupe hydrocarboné comportant 1 à 30 atomes de carbone, ou une structure comprenant un groupement lié à une chaîne polymère par l'intermédiaire d'une liaison sélectionnée dans le groupe constitué d'une liaison éther, d'une liaison ester et d'une liaison uréthane ; $R_8$ est un groupe hydrocarboné comportant 1 à 3 atomes de carbone et peut contenir un hétéroatome ; au moins deux parmi $R_5$ à $R_7$ et $R_9$ sont une structure comprenant un groupement lié à une chaîne polymère par l'intermédiaire d'une liaison sélectionnée dans le groupe constitué d'une liaison éther, d'une liaison ester et d'une liaison uréthane ;

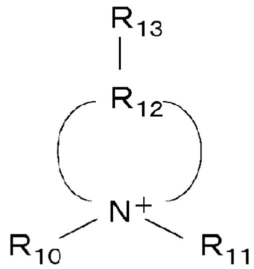

Formule (3)

où $R_{10}$, $R_{11}$ et $R_{13}$ représentent chacun indépendamment un atome d'hydrogène, un groupe hydrocarboné comportant 1 à 30 atomes de carbone, ou une structure comprenant un groupement lié à une chaîne polymère par l'intermédiaire d'une liaison sélectionnée dans le groupe constitué d'une liaison éther, d'une liaison ester et d'une liaison atomes de carbone et peut comporter un atome d'hydrogène ou un atome de soufre ; au moins deux parmi $R_{10}$, $R_{11}$ et $R_{13}$ sont une structure comprenant un groupement lié à une chaîne polymère par l'intermédiaire d'une liaison sélectionnée dans le groupe constitué d'une liaison éther, d'une liaison ester et d'une liaison uréthane ;

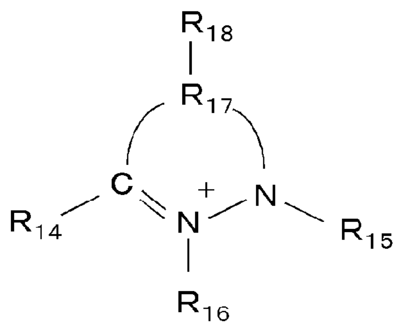

Formule (4)

où $R_{14}$ à $R_{16}$ et $R_{18}$ représentent chacun indépendamment un atome d'hydrogène, un groupe hydrocarboné comportant 1 à 30 atomes de carbone, ou une structure comprenant un groupement lié à une chaîne polymère par l'intermédiaire d'une liaison sélectionnée dans le groupe constitué d'une liaison éther, d'une liaison ester et d'une liaison uréthane ; $R_{17}$ est un groupe hydrocarboné comportant 1 à 3 atomes de carbone et peut contenir un hétéroatome ; au moins deux parmi $R_{14}$ à $R_{16}$ et $R_{18}$ sont une structure comprenant un groupement lié à une chaîne polymère par l'intermédiaire d'une liaison sélectionnée dans le groupe constitué d'une liaison éther,

d'une liaison ester et d'une liaison uréthane ;

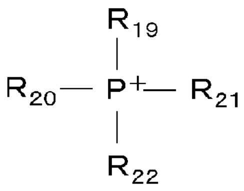

Formule (5)

où $R_{19}$ à $R_{22}$ représentent chacun indépendamment un atome d'hydrogène, un groupe hydrocarboné comportant 1 à 30 atomes de carbone, ou une structure comprenant un groupement lié à une chaîne polymère par l'intermédiaire d'une liaison sélectionnée dans le groupe constitué d'une liaison éther, d'une liaison ester et d'une liaison uréthane ; au moins deux parmi $R_{19}$ à $R_{22}$ sont une structure comprenant un groupement lié à une chaîne polymère par l'intermédiaire d'une liaison sélectionnée dans le groupe constitué d'une liaison éther, d'une liaison ester et d'une liaison uréthane ;

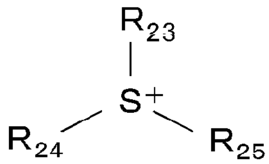

Formule (6)

où $R_{23}$ à $R_{25}$ représentent chacun indépendamment un atome d'hydrogène, un groupe hydrocarboné comportant 1 à 30 atomes de carbone, ou une structure comprenant un groupement lié à une chaîne polymère par l'intermédiaire d'une liaison sélectionnée dans le groupe constitué d'une liaison éther, d'une liaison ester et d'une liaison uréthane ; au moins deux parmi $R_{23}$ à $R_{25}$ sont une structure comprenant un groupement lié à une chaîne polymère par l'intermédiaire d'une liaison sélectionnée dans le groupe constitué d'une liaison éther, d'une liaison ester et d'une liaison uréthane.

**2.** Élément de développement selon la revendication 1, dans lequel la résine comportant un groupe organique cationique dans la chaîne polymère est une résine dont au moins trois groupements comportent chacun un groupe organique cationique lié à la chaîne polymère par l'intermédiaire d'une liaison sélectionnée dans le groupe constitué d'une liaison éther, d'une liaison ester et d'une liaison uréthane.

**3.** Procédé de production de l'élément de développement selon la revendication 1 ou 2, le procédé comprenant les étapes consistant à :

(1) former un revêtement composé d'un matériau de revêtement pour former une couche élastique sur un substrat électro-conducteur, le matériau de revêtement comprenant un matériau de base de résine liante contenant un cation comprenant un groupe fonctionnel réactif, un anion et un composé comportant un groupe fonctionnel réagissant avec le groupe fonctionnel réactif, et des particules contenant de l'oxyde d'aluminium ou de l'oxyde de magnésium constituant un oxyde d'un métal ayant une électronégativité inférieure ou égale à 11,0 en tant qu'ion métallique ; et

(2) former une couche élastique comprenant la résine liante et les particules en faisant réagir le groupe fonctionnel réactif du cation avec le groupe fonctionnel du composé dans le revêtement, et en faisant réagir le matériau de base de résine liante dans le revêtement pour préparer une résine liante dont le cation est introduit dans la molécule,

l'anion étant au moins l'un sélectionné dans le groupe constitué d'un anion sulfonate fluoré, d'un anion carboxylate fluoré, d'un anion sulfonylimide fluoré, d'un anion sulfonylméthylure fluoré, d'un anion dicyanamide, d'un anion alkylfluoroborate fluoré, d'un anion phosphate fluoré, d'un anion antimoniate fluoré, d'un anion arséniate fluoré et d'un anion bis(oxalate)borate.

**4.** Procédé de production de l'élément de développement selon la revendication 3, dans lequel le groupe fonctionnel réactif est un groupe hydroxy.

**5.** Procédé de production de l'élément de développement selon la revendication 3 ou 4, dans lequel le cation est au

moins l'un sélectionné dans le groupe constitué d'un cation ammonium quaternaire comportant au moins trois groupes fonctionnels réactifs et un cation hétérocyclique contenant de l'azote comportant au moins trois groupes fonctionnels réactifs.

**6.** Procédé de production de l'élément de développement selon la revendication 3 ou 4, dans lequel le cation est un cation imidazolium comportant au moins trois groupes fonctionnels réactifs.

**7.** Procédé de production de l'élément de développement selon l'une quelconque des revendications 3 à 6, dans lequel le composé est au moins l'un sélectionné dans le groupe constitué de composés comportant un groupe isocyanate, un groupe carboxyle ou un groupe époxy, et de la mélamine.

**8.** Cartouche de traitement pouvant être montée de manière démontable sur le corps principal d'un appareil de formation d'image électrophotographique,
la cartouche de traitement comprenant un dispositif de développement, le dispositif de développement comprenant l'élément de développement selon la revendication 1 ou 2.

**9.** Appareil de formation d'image électrophotographique comprenant un élément porteur d'image portant une image latente électrostatique, un dispositif de charge chargeant l'élément porteur d'image, un dispositif d'exposition formant une image latente électrostatique sur l'élément porteur d'image chargé, un dispositif de développement développant l'image latente électrostatique à l'aide d'un toner pour former une image de toner, un dispositif de transfert transférant l'image de toner sur un matériau de transfert, et un dispositif de fixage fixant l'image de toner transférée sur le matériau de transfert,
le dispositif de développement comprenant l'élément de développement selon la revendication 1 ou 2.

FIG. 1A

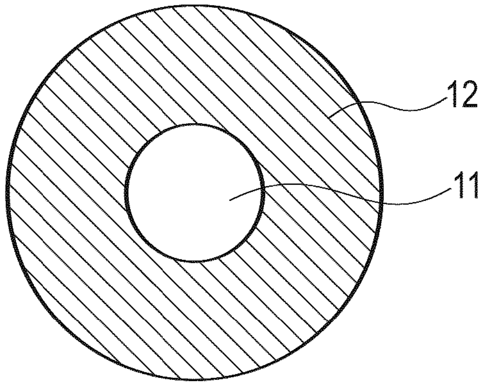


FIG. 1B

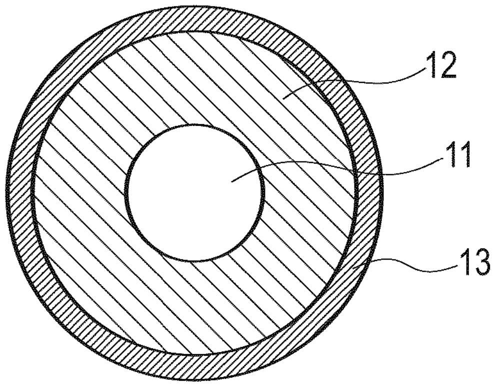

# FIG. 2

| 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|
| H 2.1 | | | | | | | | | | | | | | | | | He |
| Li 1.0 | Be 1.5 | | | | | | | | | | | B 2.0 | C 2.5 | N 3.0 | O 3.5 | F 4.0 | Ne |
| Na 0.9 | Mg 1.2 | | | | | | | | | | | Al 1.5 | Si 1.8 | P 2.1 | S 2.5 | Cl 3.0 | Ar |
| K 0.8 | Ca 1.0 | Sc 1.3 | Ti 1.5 | V 1.6 | Cr 1.6 | Mn 1.5 | Fe 1.8 | Co 1.8 | Ni 1.8 | Cu 1.9 | Zn 1.6 | Ga 1.6 | Ge 1.8 | As 2.0 | Se 2.4 | Br 2.8 | Kr |
| Rb 0.8 | Sr 1.0 | Y 1.2 | Zr 1.4 | Nb 1.6 | Mo 1.8 | Tc 1.9 | Ru 2.2 | Rh 2.2 | Pd 2.2 | Ag 1.9 | Cd 1.7 | In 1.7 | Sn 1.8 | Sb 1.9 | Te 2.1 | I 2.5 | Xe |
| Cs 0.7 | Ba 0.9 | | Hf 1.3 | Ta 1.5 | W 1.7 | Re 1.9 | Os 2.2 | Ir 2.2 | Pt 2.2 | Au 2.4 | Hg 1.9 | Tl 1.8 | Pb 1.8 | Bi 1.9 | Po 2.0 | At 2.2 | Rn |

FIG. 3

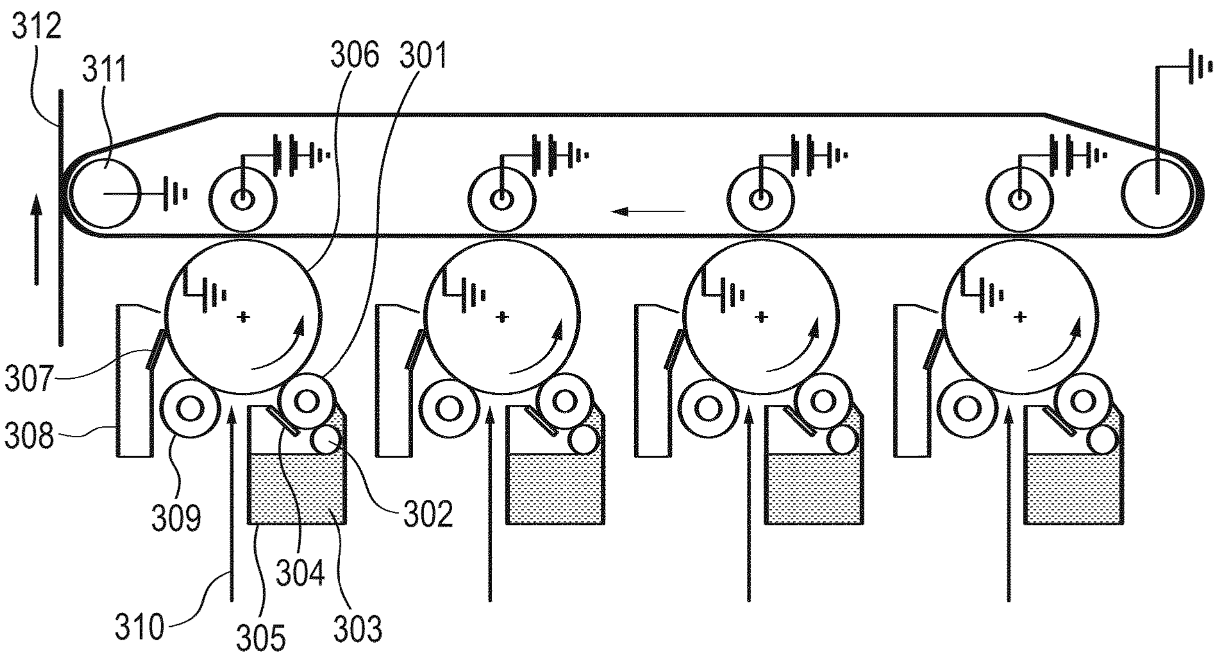

FIG. 4

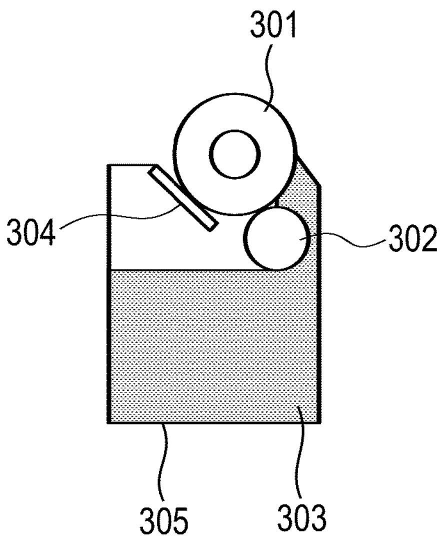


FIG. 5

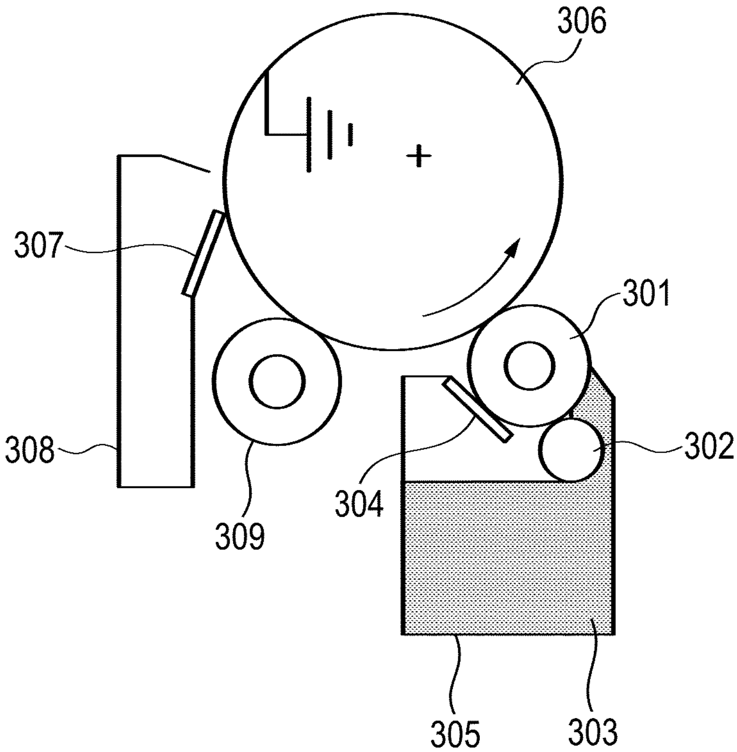

FIG. 6

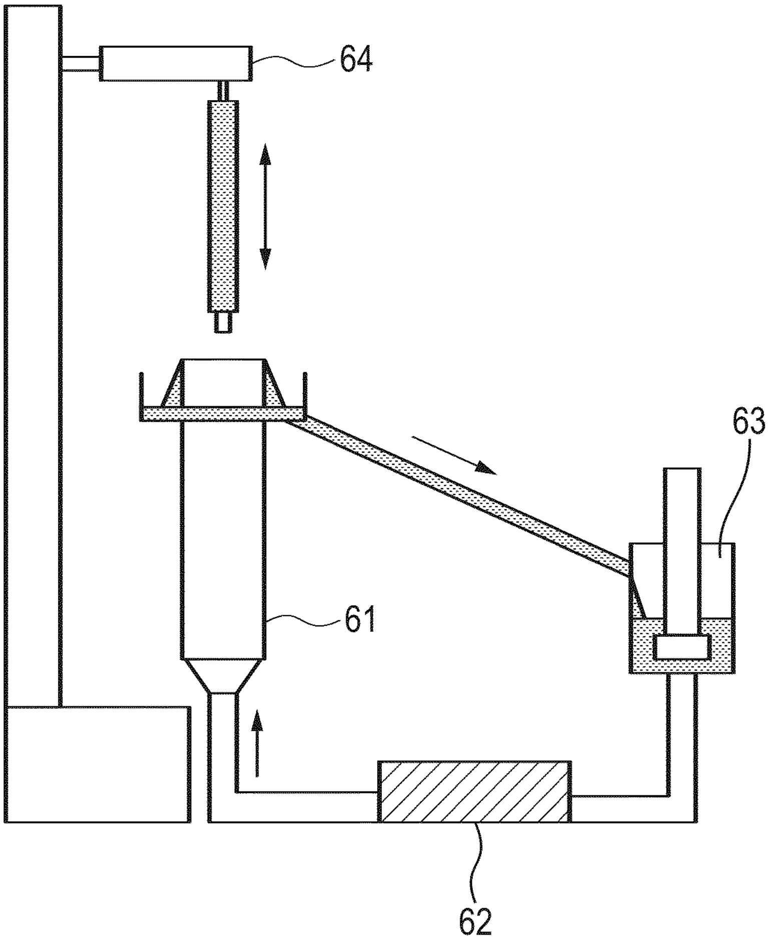

FIG. 7

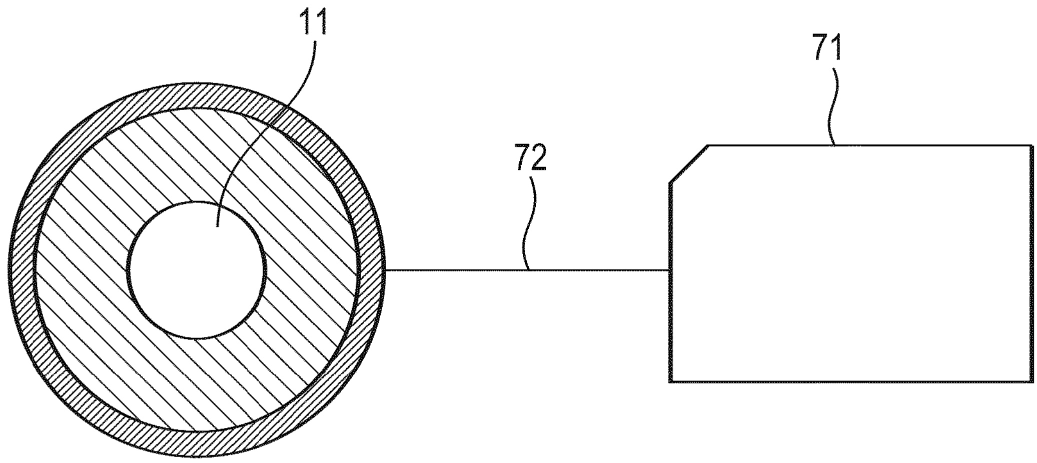


FIG. 8

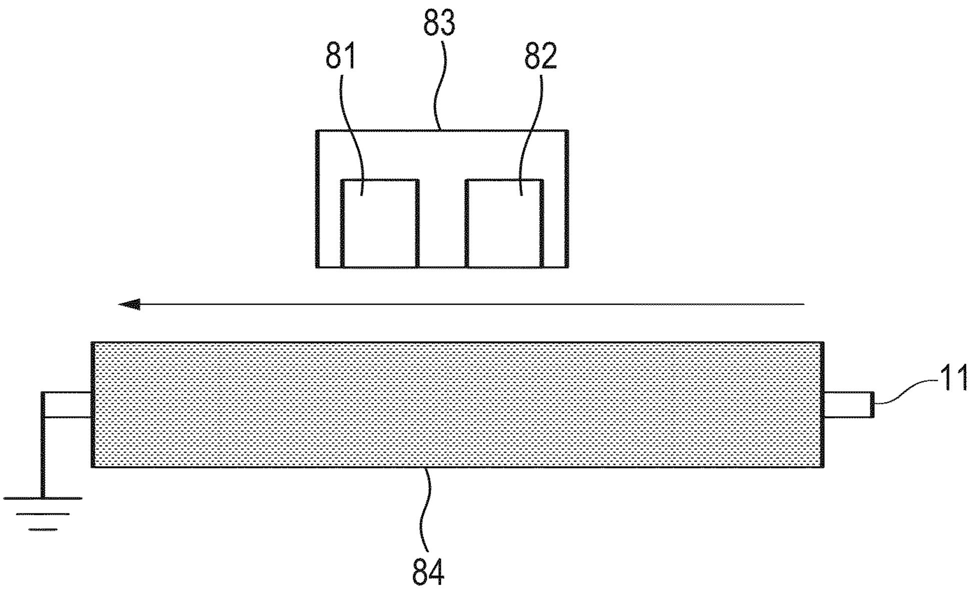

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005120158 A
- JP 2007297438 A
- US 2014221184 A1
- US 2013281275 A1
- US 2012263499 A1
- US 2012251171 A1
- JP S575047 A